(19) Europäisches Patentamt
European Patent Office
Office européen des brevets

(11) EP 4 389 458 B1

(12) **EUROPEAN PATENT SPECIFICATION**

(45) Date of publication and mention of the grant of the patent:
**26.02.2025 Bulletin 2025/09**

(21) Application number: **23216335.2**

(22) Date of filing: **13.12.2023**

(51) International Patent Classification (IPC):
***B60C 1/00*** *(2006.01)* ***B60C 9/00*** *(2006.01)*
***B60C 9/20*** *(2006.01)*

(52) Cooperative Patent Classification (CPC):
**B60C 1/0016; B60C 9/0064; B60C 9/2009;**
B60C 2001/0066; B60C 2009/2067;
B60C 2009/2077; B60C 2009/2087;
B60C 2011/0033

# (54) TIRE

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.12.2022 JP 2022201993**

(43) Date of publication of application:
**26.06.2024 Bulletin 2024/26**

(73) Proprietor: **Sumitomo Rubber Industries, Ltd.**
**Kobe-shi, Hyogo 651-0072 (JP)**

(72) Inventors:
- **MISAKI, Momoka**
  **Kobe-shi, Hyogo, 651-0072 (JP)**
- **ISHIDA, Shingo**
  **Kobe-shi, Hyogo, 651-0072 (JP)**
- **MIKI, Takashi**
  **Kobe-shi, Hyogo, 651-0072 (JP)**
- **SUZUKI, Masumi**
  **Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 643 519**
**US-A1- 2005 061 413**
**US-A1- 2016 159 155**
**US-A1- 2020 406 683**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a tire.

BACKGROUND ART

A variety of techniques have been proposed to improve various tire properties. In recent years, it has become desirable to improve durability in particular.

Known tires are disclosed in the documents US 2016/159155 A and US 2020/406683 A.

SUMMARY OF INVENTION

TECHNICAL PROBLEM

The present invention aims to solve the above problem and provide a tire with excellent durability.

SOLUTION TO PROBLEM

The present invention relates to a tire, including a two or more layered belt layer,

the belt layer including belt plies each including a steel monofilament and a coating rubber,
the belt layer having a ratio of E2/E1 of less than 0.90, wherein, when viewed in a radial cross-section of the tire, E1 denotes the number (ends/10 mm) of steel monofilaments aligned per 10 mm in a tire width direction in a region of the belt ply having the largest width in a tire axial direction which extends from a tire equator to a point Q that is located at 80% of a distance L in the tire axial direction from the tire equator to a point P that is located at an outer edge, with respect to the tire width direction, of the belt ply having the largest width in the tire axial direction; and E2 denotes the number (ends/10 mm) of steel monofilaments aligned per 10 mm in the tire width direction in a region of the belt ply having the largest width in the tire axial direction which extends from the point Q to the point P,
the belt layer having a distance S of 0.80 mm or more, wherein the distance S represents a distance in a tire radial direction between the outermost steel monofilament, with respect to the tire width direction, of the belt ply adjacent to the belt ply having the largest width in the tire axial direction and the steel monofilament of the belt ply having the largest width in the tire axial direction.

ADVANTAGEOUS EFFECTS OF INVENTION

The tire according to the present invention includes a two or more layered belt layer, and the belt layer includes belt plies each including a steel monofilament and a coating rubber, and has an above-defined E2/E1 of less than 0.90 and an above-defined S of 0.80 mm or more. Thus, the present invention can provide a tire with excellent durability.

BRIEF DESCRIPTION OF DRAWINGS

FIG. 1 is a meridional cross-sectional view of a pneumatic tire according to the present invention.
FIG. 2 is an enlarged cross-sectional view of a belt layer and a band layer in the tire of FIG. 1.
FIG. 3 is an enlarged cross-sectional view between P and Q of the belt layer and the band layer in the tire of FIG. 1.
FIG. 4 is an enlarged cross-sectional view of the belt layer and the band layer around the tire equator in the tire of FIG. 1.
FIG. 5 is an enlarged cross-sectional view showing the vicinity of the tread portion in the tire of FIG. 1.

DESCRIPTION OF EMBODIMENTS

The present invention relates to a tire including a two or more layered belt layer. The belt layer includes belt plies each including a steel monofilament and a coating rubber, and has a ratio of E2/E1 of less than 0.90, wherein, when viewed in a radial cross-section of the tire, E1 denotes the number (ends/10 mm) of steel monofilaments aligned per 10 mm in the tire width direction in a region of the belt ply having the largest width in the tire axial direction which extends from the tire

equator to a point Q that is located at 80% of a distance L in the tire axial direction from the tire equator to a point P that is located at the outer edge, with respect to the tire width direction, of the belt ply having the largest width in the tire axial direction; and E2 denotes the number (ends/10 mm) of steel monofilaments aligned per 10 mm in the tire width direction in a region of the belt ply having the largest width in the tire axial direction which extends from the point Q to the point P. The belt layer has a distance S of 0.80 mm or more, wherein the distance S represents the distance in the tire radial direction between the outermost steel monofilament, with respect to the tire width direction, of the belt ply adjacent to the belt ply having the largest width in the tire axial direction and the steel monofilament of the belt ply having the largest width in the tire axial direction.

The reason for the above-mentioned advantageous effect is not exactly clear, but the advantageous effect is believed to be due to the following mechanism.

It has been proposed to use a single-strand steel cord (steel monofilament) in a belt layer from the standpoint of tire lightweighting, etc. However, since single-strand steel cords have no twist, the resulting belt layer can be so stiff that the tread portion is inhibited from deforming upon contact with the ground, resulting in increased local distortion and, consequently, reduced durability.

On the other hand, it is considered that the single-strand filament can become rigid, so that less deformation can occur upon contact with the ground. Hence, when the belt layer is formed of belt plies in which the ratio of the number E2 of filaments aligned in the shoulder portion to the number E1 of filaments aligned in the crown portion of the belt ply having the largest width is adjusted to less than 0.90 to reduce the steel cord density around the edges of the belt layer, ground contact of the tread shoulder portion is facilitated during rolling, allowing the entire tread to contact the road surface easily. Thus, it is considered possible to easily reduce the occurrence of local distortion.

Further, when the distance S in the tire radial direction between the outermost steel monofilament, with respect to the tire width direction, of the belt ply adjacent to the belt ply having the largest width in the tire axial direction and the steel monofilament of the belt ply having the largest width in the tire axial direction is adjusted to 0.80 mm or more to space the steel monofilaments at least a predetermined distance in the tire radial direction from each other, the distance between the belt plies is increased in the vicinity of the shoulder portion which will be largely deformed upon contact with the ground. Thus, it is considered possible to reduce stress concentration around the belt edges.

Accordingly, since the contact performance of the tread portion can be improved to reduce the occurrence of local distortion, and at the same time the stress concentration in the vicinity of the shoulder portion, which will undergo large deformation, can also be easily reduced, it is believed that durability can be improved.

As discussed above, the present invention solves the problem (purpose) of improving durability by formulating a tire including belt plies that satisfy "E2/E1 of less than 0.90" and "S of 0.80 mm or more". In other words, the parameters: "E2/E1 of less than 0.90" and "S of 0.80 mm or more" do not define the problem (purpose), and the problem herein is to improve durability. In order to solve this problem, the tire has been formulated to satisfy the parameters.

Although embodiments of the present invention are described below with reference to the drawings, these embodiments are merely exemplary embodiments, and the tire of the present invention is not limited to the following embodiments.

FIG. 1 is a meridional cross-sectional view of a pneumatic tire 2 (pneumatic tire) according to the present embodiment in the normal state, including the axis of rotation of the tire.

Herein, the dimensions of the parts of the tire are measured for the tire in the normal state, unless otherwise stated.

Herein, the term "normal state" refers to a state where the tire is mounted on a normal rim (not shown), inflated to a normal internal pressure, and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "normal rim" refers to a rim specified for each tire by the standard in a standard system including standards according to which tires are provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which tires are provided, and may be "maximum air pressure" in JATMA, "inflation pressure" in ETRTO, or the maximum value shown in Table "TIRE LOAD LIMITS AT VARIOUS COLD INFLATION

PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

Also herein, the term "normal load" refers to a load specified for each tire by the standard in a standard system including standards according to which tires are provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The term "cross-sectional width Wt (mm)" of the tire refers to the largest width of the tire in the normal state between the outer surfaces of the sidewalls, excluding patterns, letters, and the like on the sides of the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to half of the difference between the outer diameter Dt of the tire and the rim diameter R. In other words, the cross-sectional height Ht can be determined by (Dt - R)/2.

In FIG. 1, the vertical direction corresponds to the radial direction of the tire 2, the horizontal direction corresponds to the axial direction of the tire 2, and the direction perpendicular to the paper corresponds to the circumferential direction of the tire 2. A tread portion 4 includes a cap layer 30 and a base layer 28.

Although FIG. 1 shows an example of a two-layered tread portion 4 consisting of a cap layer 30 and a base layer 28, the tread portion 4 may include a single-layered tread or a three or more-layered tread.

In the tire 2, each sidewall 6 extends radially substantially inwardly from the end of the tread portion 4. The radially outer portion of the sidewall 6 is bonded to the tread portion 4. The radially inner portion of the sidewall 6 is bonded to a clinch 10. The sidewall 6 can prevent damage to a carcass 14.

In FIG. 1, each wing 8 is located between the tread portion 4 and the sidewall 6. The wing 8 is bonded to both the tread portion 4 and the sidewall 6.

Each clinch 10 is located radially substantially inward of the sidewall 6 and has at least one part that contacts a rim.

The carcass 14 includes a carcass ply 36. Although the carcass 14 in this tire 2 includes one carcass ply 36, it may include two or more carcass plies.

In this tire 2, the carcass ply 36 extends between bead cores 32 on opposite sides along the tread portion 4 and the sidewalls 6. The carcass ply 36 is folded around each bead core 32 from the inside to the outside in the axial direction. The thus folded carcass ply 36 is provided with a main portion 36a and a pair of folded portions 36b. Namely, the carcass ply 36 includes a main portion 36a and a pair of folded portions 36b.

Each bead core 32 includes a bead apex 34 that extends radially outwardly from the bead core 32. The bead core 32 desirably has a ring shape and contains a wound non-stretchable wire. The bead apex 34 is radially outwardly tapered.

Though not shown, the carcass ply 36 desirably consists of a parallel array of cords and a topping rubber. The absolute value of the angle of each cord with respect to the equator CL is suitably from 75° to 90°. In other words, the carcass 14 preferably has a radial structure.

In FIG. 1, a belt layer 16 is located radially inward of the tread portion 4. The belt layer 16 is stacked on the carcass 14. The belt layer 16 reinforces the carcass 14. The belt layer 16 is formed of two or more layers although the belt layer 16 in the tire 2 of FIG. 1 consists of two layers, an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times, but preferably not more than 0.9 times the cross-sectional width of the tire 2.

In the belt layer 16, the interior layer 38, the exterior layer 40, and other optional layers constituting the belt layer each desirably consist of a parallel array of single-strand steel cords (steel monofilaments) and a topping rubber (coating rubber). In other words, each layer constituting the belt layer 16 contains a parallel array of steel monofilaments.

FIG. 2 is an enlarged cross-sectional view of a belt layer 16 (interior layer 38 and exterior layer 40) and a band layer 18.

As shown in FIG. 2, each belt ply 17 includes a belt cord 17A and a topping rubber 17B (coating rubber) coating the belt cord 17A. The belt cord 17A is a single-strand steel cord (steel monofilament). Although the cord in the present embodiment is a single-strand cord having a circular transverse section, it is not limited to this embodiment and may have other shapes, such as an oval or polygonal shape, in transverse section. In view of properties such as durability, the filament may also be preformed before use.

As shown in FIG. 2, for example, the belt plies 17 include a first belt ply (interior layer 38) and a second belt ply (exterior layer 40) that is adjacent to the first belt ply (interior layer 38) in the tire radial direction. The second belt ply (exterior layer 40) is located outward of the first belt ply (interior layer 38) in the tire radial direction.

The belt cord 17A in the present embodiment is formed of a steel monofilament. Such a belt cord 17A can reduce deformation of the belt ply 17 during driving. The belt cord 17A in the first belt ply (interior layer 38) and the belt cord 17A in the second belt ply (exterior layer 40) may have the same shape or different shapes.

The diameter D of the steel monofilament (single-strand steel cord) is preferably 0.25 mm or more, more preferably 0.30 mm or more, still more preferably 0.35 mm or more, but it is preferably 0.45 mm or less, more preferably 0.44 mm or less, still more preferably 0.42 mm or less, further preferably 0.40 mm or less. When the diameter D is within the range indicated above, the advantageous effect can be suitably achieved.

Here, the diameter of the steel monofilament (single-strand steel cord) refers to the outer diameter of the filament, specifically, the outer diameter of the steel monofilament measured in a cross-section perpendicular to the longitudinal direction of the steel monofilament. Moreover, if the outer diameter is difficult to determine unambiguously, such as in the case of a steel monofilament having a flat shape or the like in a cross-section perpendicular to the longitudinal direction of the steel monofilament, the outer diameter of the filament is taken as the average of the major diameter and the largest diameter perpendicular to the major diameter of the filament.

The mechanism by which the advantageous effect can be better achieved by adjusting the filament diameter within the range indicated above, particularly 0.25 to 0.42 mm, is not clear, but it is considered that adjusting the cord diameter to a predetermined value or less can prevent the belt layer from being too stiff, thereby improving the contact performance, while adjusting the cord diameter to a predetermined value or more can make it easier to reduce cord breakage. Thus, it is believed that durability can be improved.

For example, the belt cord 17A is desirably inclined at an angle of 15 to 45 degrees with respect to the tire circumferential direction. Here, the angle of the belt cord 17A with respect to the tire circumferential direction refers to the angle between the belt cord 17A and the tire circumferential direction measured on the tire equator. The angle between the belt cord 17A and the tire circumferential direction can be measured by separating the tread portion and the like from the tire to expose the belt cord 17A on the surface of the tire.

The belt cord 17A in the first belt ply (interior layer 38) and the belt cord 17A in the second belt ply (exterior layer 40) are desirably inclined in opposite directions with respect to the tire circumferential direction so that the respective cords cross each other, though the present invention is not limited to this embodiment.

In view of adhesion to the rubber composition coating surrounding the belt cord 17A, a plating containing copper and zinc is preferably applied to the surface of the belt cord 17A. Moreover, a plating is more preferably applied which contains a metallic element whose ionization tendency is between those of copper and zinc, such as cobalt, nickel, bismuth, or antimony, in addition to the copper and zinc.

Also, in view of adhesion to the surrounding rubber composition, the belt cord 17A preferably has a polybenzoxazine compound layer on the surface.

The topping rubber 17B (coating rubber) coating the belt cord 17A desirably contains a well-known rubber material as well as a phenolic thermosetting resin, silica, a salt of an organic fatty acid and a metal whose ionization tendency is between those of copper and zinc, such as cobalt, nickel, bismuth, or antimony, as described above, a polybenzoxazine compound, or other materials.

The belt layer 16 in the tire 2 includes belt plies each including a belt cord 17A formed of a steel monofilament and a topping rubber 17B (coating rubber), and has a ratio of E2/E1 of less than 0.90, wherein, when viewed in a radial cross-section of the tire, E1 denotes the number (ends/10 mm) of steel monofilaments aligned per 10 mm in the tire width direction in a region of the belt ply having the largest width in the tire axial direction which extends from the tire equator CL to a point Q that is located at 80% of a distance L in the tire axial direction from the tire equator CL to a point P that is located at the outer edge, with respect to the tire width direction, of the belt ply having the largest width in the tire axial direction; and E2 denotes the number (ends/10 mm) of steel monofilaments aligned per 10 mm in the tire width direction in a region of the belt ply having the largest width in the tire axial direction which extends from the point Q to the point P.

The ratio of E2/E1 is preferably 0.85 or less, more preferably 0.82 or less, still more preferably 0.80 or less. The

lower limit is not limited, but it is preferably 0.50 or more, more preferably 0.60 or more, still more preferably 0.65 or more, further preferably 0.75 or more. When the ratio is within the range indicated above, the advantageous effect can be suitably achieved.

E1 and E2 can be appropriately controlled by the number of belt cords aligned in the belt layer in the production of the tire. Moreover, the ratio of E2 to E1 (E2/E1) can be controlled by adjusting the outer diameter of the unvulcanized tire on the side of the belt layer edge to be smaller than the outer diameter of the mold.

Here, the "point P that is located at the outer edge with respect to the tire width direction" in the present invention refers to a point (edge) located outermost in the tire width direction of the belt ply having the largest width in the tire axial direction among the belt plies forming the belt layer. In the case of the belt layer 16 consisting of an interior layer 38 and an exterior layer 40 in FIG. 1, the outer edge of the interior layer 38 that extends more outwardly in the tire axial direction than the exterior layer 40 corresponds to the position P of the outer edge of the belt layer 16 with respect to the tire axial direction.

The "distance L in the tire axial direction from the tire equator to the point P of the belt ply having the largest width in the tire axial direction" refers to the linear distance in the tire axial direction from the tire equator CL to the position P. In the case of the belt layer 16 consisting of an interior layer 38 and an exterior layer 40 in FIG. 1, it corresponds to the linear distance in the tire axial direction from the tire equator CL to the outer edge P of the interior layer 38.

The "point Q that is located at 80% of the distance L in the tire axial direction from the tire equator to the point P of the belt ply having the largest width in the tire axial direction" refers to the position that is located outwardly in the tire axial direction from the tire equator by 80% of the linear distance L in the tire axial direction from the tire equator CL to the position P. In the case of the belt layer 16 consisting of an interior layer 38 and an exterior layer 40 in FIG. 1, it corresponds to the position that is 80% of the linear distance L outward in the tire axial direction from the tire equator CL.

When viewed in a radial cross-section of the tire such as that shown in FIG. 1, the number (end count, ends) E1 (ends/10 mm) of steel monofilaments aligned per 10 mm in the tire width direction in a region L1 from the tire equator CL to the point Q of the belt ply having the largest width in the tire axial direction is preferably 7.0 ends/10 mm or more, more preferably 8.5 ends/10 mm or more, still more preferably 11.2 ends/10 mm or more, particularly preferably 12.0 ends/10 mm or more, but it is preferably 15.5 ends/10 mm or less, more preferably 14.5 ends/10 mm or less, still more preferably 14.0 ends/10 mm or less. When E1 is within the range indicated above, the advantageous effect can be suitably achieved.

The mechanism by which the advantageous effect can be better achieved by adjusting E1 within the range indicated above is not clear, but it is believed to be as follows.

When the tire with such a high-ends specification steps on a protruding object such as a nail, the tire can receive it as if the tire were like an iron plate. Thus, it is believed that durability can be improved.

When viewed in a radial cross-section of the tire such as that shown in FIG. 1, the number (end count, ends) E2 (ends/10 mm) of steel monofilaments aligned per 10 mm in the tire width direction in a region L2 from the point Q to the point P of the belt ply having the largest width in the tire axial direction is preferably 5.0 ends/10 mm or more, more preferably 5.6 ends/10 mm or more, still more preferably 6.8 ends/10 mm or more, further preferably 7.5 ends/10 mm or more, but it is preferably 10.2 ends/10 mm or less, more preferably 9.6 ends/10 mm or less, still more preferably 9.5 ends/10 mm or less, further preferably 9.0 ends/10 mm or less. When E2 is within the range indicated above, the advantageous effect can be suitably achieved.

Here, E1 and E2 are each the number of steel monofilaments aligned per 10 mm width in the belt ply having the largest width in the tire axial direction and creating the point P.

Moreover, for example, E1 and E2 can be measured as described below.

First, the tire is cut in the radial direction to create a cross-section, in which the distance between the bead cores 32 is then fixed to be the same distance as when the tire is mounted on a normal rim. Then, the distance L between the widthwise outermost point P of the belt layer and the tire equator CL is calculated. Next, the position Q that is 80% of the distance L is calculated, and the point of intersection Q' between a straight line which passes through the point Q and is parallel to the tire radial direction and the belt ply having the largest width in the tire axial direction is determined. Subsequently, the number E1 of steel monofilaments aligned per 10 mm in the tire width direction is calculated from the number of steel monofilaments aligned within the belt ply between the tire equator CL and the point Q' and the actual length of the belt ply.

Likewise, E2 can also be calculated from the number of steel monofilaments aligned within the belt ply having the largest width in the tire axial direction between the point Q' and the point P and the actual length of the belt ply.

Here, when the belt ply having the largest width in the tire axial direction forms an arc as in FIG. 1, the actual length of the belt ply is not the linear distance from the tire equator CL to the point Q', but the length of the arc formed by the belt ply in a section from the tire equator CL to the point Q'.

FIG. 3 is an enlarged cross-sectional view between P and Q of the belt layer 16 (interior layer 38 and exterior layer 40) and the band layer 18.

As shown in FIG. 3, a belt cord 17A2 in the second belt ply (exterior layer 40) is a belt cord located outermost in the tire width direction among the belt cords 17A in the second belt ply. Moreover, the distance S in the tire radial direction between the belt cord 17A2 and a belt cord 17A1 in the first belt ply (interior layer 38) is 0.80 mm or more.

In the tire 2, each of the belt plies constituting the two or more layered belt layer 16 includes a belt cord 17A formed of a steel monofilament and a topping rubber 17B (coating rubber), and the distance S in the tire radial direction between the outermost steel monofilament, with respect to the tire width direction, of the belt ply adjacent to the belt ply having the largest width in the tire axial direction and the steel monofilament of the belt ply having the largest width in the tire axial direction is 0.80 mm or more.

Although the tire shown in FIG. 3 does not include any other rubber sheet or the like between the interior layer 38 and the exterior layer 40 adjacent to each other, the tire may include an additional rubber sheet or the like between the adjacent belt plies.

S is preferably 0.85 mm or more, more preferably 0.95 mm or more, still more preferably 1.00 mm or more. The upper limit is not limited, but it is preferably 1.70 mm or less, more preferably 1.50 mm or less, still more preferably 1.30 mm or less, particularly preferably 1.20 mm or less. The lower limit is not limited. When S is within the range indicated above, the advantageous effect can be suitably achieved.

Here, in the tire 2 of the present invention, it is sufficient that at least one belt ply satisfies "S of 0.80 mm or more" among the belt plies adjacent to the belt ply that provides the position P of the outer edge of the belt layer with respect to the tire width direction. For example, in the case of a two-layered belt layer, it is sufficient that the belt ply adjacent to the belt ply that provides the position P satisfies "S of 0.80 mm or more"; or in the case of a three-layered belt layer, it is sufficient that at least one, desirably both, of the two belt plies adjacent to the belt ply that provides the position P satisfies "S of 0.80 mm or more".

Here, in the present invention, the "outermost steel monofilament, with respect to the tire width direction, of the belt ply adjacent to the belt ply having the largest width in the tire axial direction" refers to the belt cord (steel monofilament) located outermost in the tire width direction in the belt ply adjacent to the belt ply that creates the point (edge) P located outermost in the tire width direction in the belt layer consisting of two or more belt plies. In the case of the belt layer 16 consisting of two belt plies, an interior layer 38 and an exterior layer 40, in FIG. 3, it refers to the belt cord 17A2 located outermost in the tire width direction among the belt cords (steel monofilaments) in the exterior layer 40 adjacent to the interior layer 38 which provides the position P.

Moreover, the "distance S in the tire radial direction between the outermost steel monofilament, with respect to the tire width direction, of the belt ply adjacent to the belt ply having the largest width in the tire axial direction and the steel monofilament of the belt ply having the largest width in the tire axial direction" refers to the linear distance in the tire radial direction between the outermost steel monofilament, with respect to the tire width direction, in the belt ply adjacent to the belt ply that provides the position P of the outer edge of the belt layer with respect to the tire width direction and the steel monofilament in the belt ply that provides the position P.

Here, in the case where a straight line extending in the tire radial direction from the inner surface, with respect to the tire radial direction, of the outermost steel monofilament, with respect to the tire width direction, in the adjacent belt ply crosses the outermost surface of the steel monofilament in the belt ply that provides the position P, the distance S is the linear distance in the tire radial direction between the inner surface and the outermost surface with respect to the tire radial direction.

In the case where a straight line extending in the tire radial direction from the inner surface, with respect to the tire radial direction, of the outermost steel monofilament, with respect to the tire width direction, in the adjacent belt ply does not cross the outermost surface of the steel monofilament in the belt ply that provides the position P (for example, no cord exists on the straight line), the distance S is the linear distance in the tire radial direction between the above-described inner surface with respect to the tire radial direction and a point of intersection between the straight line extending in the tire radial direction from the inner surface with respect to the tire radial direction and a straight line connecting the outer surfaces, with respect to the tire radial direction, of two steel monofilaments close to the former straight line in the belt ply that provides the position P.

In the case of a tire including an additional rubber sheet or the like between adjacent belt plies, the distance S is measured as described above in the tire including adjacent belt plies with a rubber sheet or the like provided therebetween.

In the belt layer 16 consisting of two belt plies, an interior layer 38 and an exterior layer 40, in FIG. 3, a straight line extending in the tire radial direction from the inner surface, with respect to the tire radial direction, of the outermost belt cord 17A2, with respect to the tire width direction, in the exterior layer 40 does not cross the outermost surface of the belt cord 17A1 in the interior layer 38 which provides the position P. Thus, the distance S in such a tire is the linear distance in the tire radial direction between the inner surface of the belt cord 17A2 with respect to the tire radial direction and a point of intersection between the straight line extending in the tire radial direction from the inner surface of the belt cord 17A2 with respect to the tire radial direction and a straight line connecting the outer surfaces, with respect to the tire radial direction, of two belt cords 17A1 close to the former straight line. Also, in the case of a tire including an additional rubber sheet or the like between an interior layer 38 and an exterior layer 40, the distance S is measured as described above in the tire including a rubber sheet or the like.

FIG. 4 is an enlarged cross-sectional view of the belt layer 16 (interior layer 38 and exterior layer 40) and the band layer 18 around the tire equator CL.

As shown in FIG. 4, a belt cord 17A5 in the first belt ply (interior layer 38) is a belt cord provided on the tire equator CL among the belt cords 17A in the first belt ply. A belt cord 17A6 in the second belt ply (exterior layer 40) is a belt cord provided on the tire equator CL among the belt cords 17A in the second belt ply.

In the tire 2, the distance Sc between the steel monofilaments (single-strand steel cords) on the tire equator respectively contained in the belt plies adjacent to each other is desirably 0.15 to 0.50 mm in order to better achieve the advantageous effect. Sc is more preferably 0.18 mm or more, still more preferably 0.25 mm or more, further preferably 0.30 mm or more, further preferably 0.32 mm or more, further preferably 0.36 mm or more, further preferably 0.37 mm or more, but it is more preferably 0.45 mm or less, still more preferably 0.42 mm or less, further preferably 0.40 mm or less. When Sc is within the range indicated above, the advantageous effect can be suitably achieved.

In the present invention, the "distance Sc between the steel monofilaments on the tire equator respectively contained in the belt plies adjacent to each other" refers to the linear distance in the tire radial direction between the steel monofilaments which are respectively contained in the belt plies adjacent to each other and which are located on the tire equator. In the case of the tire including a two-layered belt layer consisting of an interior layer 38 and an exterior layer 40 in FIG. 4, it refers to the linear distance Sc in the tire radial direction between the belt cord 17A5 located on the tire equator CL in the first belt ply (interior layer 38) and the belt cord 17A6 located on the tire equator CL in the second belt ply (exterior layer 40).

Here, when no steel monofilament is located on the tire equator, it refers to the linear distance in the tire radial direction between each steel monofilament closest to the tire equator with respect to the tire width direction.

The mechanism by which the advantageous effect can be better achieved by adjusting the distance Sc within the range indicated above, particularly 0.25 to 0.45 mm, is not clear, but it is believed to be as follows.

In the shoulder portion, which will undergo large deformation during rolling, stress concentration can be reduced by distancing the cords respectively contained in the adjacent belt plies from each other. On the other hand, in the central portion, which will not undergo much deformation, heat accumulation can be easily reduced by adjusting the thickness of the coating rubber layer in the belt layer to a predetermined value or less to reduce the amount of rubber between the belt plies.

Moreover, if the thickness of the coating rubber layer in the belt layer is too small, the cords may come into contact with each other and may be broken by friction. However, the breakage can be prevented by adjusting the thickness to a predetermined value or more.

Thus, it is believed that durability can be significantly improved.

Here, in the tire 2 of the present invention, the range indicated above is desirably satisfied by at least one distance Sc between the steel monofilaments (single-strand steel cords) on the tire equator respectively contained in the belt plies adjacent to each other. For example, in the case of a two-layered belt layer, the adjacent belt plies preferably satisfy the range indicated above. In the case of a three-layered belt layer, preferably at least one pair of adjacent belt plies satisfies the range indicated above, and more preferably all pairs of adjacent belt plies satisfy the range indicated above.

In the tire 2, the product of the above-defined S (mm) and the above-defined D (mm), $S \times D$, is desirably at least 0.22 but not more than 0.58 in order to better achieve the advantageous effect.

The product of $S \times D$ is more preferably 0.24 or more, still more preferably 0.28 or more, further preferably 0.30 or more, further preferably 0.32 or more, further preferably 0.35 or more, further preferably 0.36 or more, but it is more preferably 0.54 or less, still more preferably 0.50 or less, further preferably 0.46 or less, further preferably 0.45 or less, further preferably 0.44 or less. When the product is within the range indicated above, the advantageous effect can be suitably achieved.

The mechanism by which the advantageous effect can be better achieved by adjusting the product of $S \times D$ within the range indicated above is not clear, but it is believed to be as follows.

When the product of $S \times D$ is within the range indicated above, it is considered that the contact pressures applied to the shoulder portion and the crown portion will be even, so that these portions are less likely to be damaged. In other words, if the product of $S \times D$ is small, it is considered that as the shoulder portion is thin, the contact pressure will concentrate on the crown portion, causing delamination at the crown portion; additionally, slippage can constantly occur during driving, leading to uneven wear. Conversely, if the product of $S \times D$ is large, it is considered that as the shoulder portion is thick, the contact pressure will be unevenly distributed towards the shoulder portion, which can easily develop into delamination at the edges of the belt layer. Thus, it is believed that adjusting the product of $S \times D$ within the range indicated above can reduce damage as described above, thereby improving durability.

In the tire 2, the ratio of the above-defined S (mm) to the above-defined Sc (mm), S/Sc, is desirably at least 2.2 but not more than 4.0 in order to better achieve the advantageous effect.

The ratio of S/Sc is more preferably 2.3 or more, still more preferably 2.4 or more, further preferably 2.6 or more, further preferably 2.7 or more, further preferably 2.8 or more, but it is more preferably 3.8 or less, still more preferably 3.6 or less, further preferably 3.4 or less. When the ratio is within the range indicated above, the advantageous effect can be suitably achieved.

The mechanism by which the advantageous effect can be better achieved by adjusting the ratio of S/Sc within the

range indicated above is not clear, but it is believed to be as follows.

When the ratio of S/Sc is within the range indicated above, it is considered that the contact pressures applied to the shoulder portion and the crown portion will be even, so that these portions are less likely to be damaged. In other words, if the ratio of S/Sc is small, it is considered that as the shoulder portion is thin, the contact pressure will concentrate on the crown portion, causing delamination at the crown portion; additionally, slippage can constantly occur during driving, leading to uneven wear. Conversely, if the ratio of S/Sc is large, it is considered that as the shoulder portion is thick, the contact pressure will be unevenly distributed towards the shoulder portion, which can easily develop into delamination at the edges of the belt layer. Thus, it is believed that adjusting the ratio of S/Sc within the range indicated above can reduce damage as described above, thereby improving durability.

In the tire 2, the product of the ratio (E2/E1) of the above-defined E2 (ends/10 mm) to the above-defined E1 (ends/10 mm) and the above-defined D (mm), E2/E1 × D, is desirably at least 0.18 but not more than 0.36 in order to better achieve the advantageous effect.

The product of E2/E1 × D is more preferably 0.20 or more, still more preferably 0.24 or more, further preferably 0.26 or more, further preferably 0.28 or more, further preferably 0.30 or more, but it is more preferably 0.35 or less, still more preferably 0.34 or less, further preferably 0.33 or less. When the product is within the range indicated above, the advantageous effect can be suitably achieved.

The mechanism by which the advantageous effect can be better achieved by adjusting the product of E2/E1 × D within the range indicated above is not clear, but it is believed to be as follows.

When the product of E2/E1 × D is within the range indicated above, it is considered that the ends in the shoulder portion are moderately sparse and the filaments have moderate bending stiffness, which can disperse distortion occurring during driving and reduce heat generation, resulting in improved durability. In other words, it is considered that if the product of E2/E1 × D is small, the shoulder portion can move excessively, resulting in increased heat generation, while if the product is too large, the shoulder portion cannot move well, resulting in distortion concentrated on the rubber. Thus, it is believed that adjusting the product of E2/E1 × D within the range indicated above can reduce heat generation as described above, thereby improving durability.

In the tire 2, the product of the ratio (E2/E1) of the above-defined E2 (ends/10 mm) to the above-defined E1 (ends/10 mm) and the above-defined Sc (mm), E2/E1 × Sc, is desirably at least 0.16 but not more than 0.40 in order to better achieve the advantageous effect.

The product of E2/E1 × Sc is more preferably 0.20 or more, still more preferably 0.24 or more, further preferably 0.26 or more, further preferably 0.28 or more, further preferably 0.29 or more, further preferably 0.31 or more, but it is more preferably 0.38 or less, still more preferably 0.36 or less, further preferably 0.34 or less. When the product is within the range indicated above, the advantageous effect can be suitably achieved.

The mechanism by which the advantageous effect can be better achieved by adjusting the product of E2/E1 × Sc within the range indicated above is not clear, but it is believed to be as follows.

When the product of E2/E1 × Sc is within the range indicated above, it is considered that the difference in stress between the region of E1 and the region of E2 can be reduced, leading to improved durability. Specifically, if the ends difference between E1 and E2 is large (E1 is extremely dense or E2 is extremely sparse), and Sc (B-B gauze) is small, it is considered that the E2 region cannot receive shear stress that is generated in the E1 region and transmitted to the E2 region, leading to cord breakage or fracture of the rubber layer. Conversely, if the ends difference between E1 and E2 is small, and the B-B gauze is large, the radial bending stiffness of the entire two-layer breaker package is increased, which can cause deterioration of the contact patch. Thus, the contact patch as a whole cannot contact the ground flexibly, and the contact performance of the shoulder portion can be deteriorated. Moreover, it is considered that as the contact performance of the shoulder portion deteriorates, the bending distortion will concentrate on the steel cords, resulting in cord breakage. Thus, it is believed that adjusting the product of E2/E1 × Sc within the range indicated above can reduce the difference in stress as described above, thereby improving durability.

In FIG. 1, the band layer (belt-reinforcing layer) 18 is located radially outward of the belt layer 16. In the tire 2 of FIG. 1, the band layer 18 has a width that is equal to the width of the belt layer 16 with respect to the axial direction. The band layer 18 may have a width that is larger than the width of the belt layer 16.

The band layer 18 desirably consists of a cord and a topping rubber (coating rubber). The cord is spirally wound. This band layer 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The band layer 18 in the tire 2 can enhance the restraint of each belt ply 17 to enhance durability during high-speed driving and can also impart good ride quality.

An exemplary embodiment of the band layer 18 includes an organic fiber cord 18A and a reinforcing rubber 18B (band layer coating rubber composition) coating the organic fiber cord 18A. Here, the organic fiber cord has usually been subjected to dipping treatment to improve adhesion to the rubber.

Examples of the organic fiber constituting the organic fiber cord 18A include polyesters, polyamides, and

celluloses. These fibers may be synthetic fibers or biomass-derived fibers. Also, in view of life cycle assessment, the organic fiber is desirably derived from a recycled or reclaimed material. The fiber may also be formed of a single component including a synthetic fiber, biomass fiber, or recycled or reclaimed fiber. Also usable are hybrid cords obtained by intertwining these fibers, multifilament cords obtained by combining the respective filaments, and cords with a chemical structure in which the respective components are chemically bound to each other.

Examples of the polyester cords include polyethylene terephthalate (PET) cords, polyethylene naphthalate (PEN) cords, and polyethylene furanoate (PEF) cords. PEF cords may be used because they have excellent resistance to air permeation compared to other polyester cords and can easily maintain the air pressure inside the tire. Moreover, the polyester cords may be hybrid cords with other organic fiber cords, in which the polyester cords have been partially replaced with other organic fiber cords such as polyamide fiber cords.

When the polyester cords are biomass-derived polyester cords, suitable examples include biomass PET cords formed from biomass-derived terephthalic acid and ethylene glycol, and biomass PEF cords formed from biomass-derived furandicarboxylic acid.

For example, the biomass polyester cords can be formed from biomass terephthalic acid, biomass ethylene glycol, etc. which are produced by converting bioethanol or furfurals, carenes, cymenes, terpenes, etc., or converting various animal- or plant-derived compounds, or directly fermenting microorganisms or the like.

Examples of the polyamide cords include aliphatic polyamides, semi-aromatic polyamides, and fully aromatic polyamides.

Aliphatic polyamides refer to polyamides having a backbone in which straight carbon chains are connected via amide bonds. Examples include Nylon 4 (PA4), Nylon 410 (PA410), Nylon 6 (PA6), Nylon 66 (PA66), Nylon 610 (PA610), Nylon 10 (PA10), Nylon 1010 (PA1010), Nylon 1012 (PA1012), and Nylon 11 (PA11). Among these are Nylon 4, Nylon 410, Nylon 610, Nylon 10, Nylon 1010, Nylon 11, etc. which can be easily formed partially or fully from biomass-derived materials.

Examples of Nylon 6 and Nylon 66 include those which are produced by ring-opening polymerization of conventional chemically synthesized caprolactam and those which are produced by condensation polymerization of hexamethylenediamine and adipic acid. Other examples include Nylon 6 and Nylon 66 produced from bio-caprolactam, or bio-adipic acid and bio-hexamethylenediamine, made from bio-derived cyclohexane as a starting material. Moreover, the above-mentioned biological raw materials may be formed from sugars such as glucose, etc. Such Nylon 6 and Nylon 66 are considered to have a similar strength to conventional ones.

Non-limiting typical examples of Nylon 4 include those made from 2-pyrrolidone produced by converting bio-fermented glutamic acid to γ-aminobutyric acid. Since Nylon 4 features good thermal/mechanical stability and easy polymer structure design, it contributes to improvements in tire performance and strength and therefore can be suitably used.

Nylon 410, Nylon 610, Nylon 1010, Nylon 1012, Nylon 11, etc. may be made from ricinoleic acid obtained from castor oil (Ricinus communis), etc. Specifically, Nylon 410, Nylon 610, and Nylon 1010 can be produced by condensation polymerization of sebacic acid or dodecanedioic acid obtained from castor oil with any diamine compound. Nylon 11 can be produced by condensation polymerization of 11-aminoundecanoic acid obtained from castor oil.

Semi-aromatic polyamides refer to polyamides having an aromatic ring structure in a part of the molecular chain. Examples include Nylon 4T (PA4T), Nylon 6T (PA6T), and Nylon 10T (PA10T).

Nylon 4T, Nylon 6T, and Nylon 10T can be produced by condensation polymerization of terephthalic acid as a dicarboxylic acid with any diamine compound having the corresponding number of carbons. Here, these nylon materials may also be produced from the biomass-derived terephthalic acid described above. They have a rigid cyclic structure in the molecular chain and therefore are excellent in properties such as heat resistance.

Other examples of the above-described aliphatic polyamides and semi-aromatic polyamides include polyamide 5X produced by polymerizing 1,5-pentanediamine derived from lysine with a dicarboxylic acid (where X represents the number of carbons derived from the dicarboxylic acid and is an integer or T indicating terephthalic acid).

Examples of the fully aromatic polyamides include polyamides having a backbone in which aromatic rings are connected via amide bonds, such as polyparaphenylene telephthalamide. Like the above-mentioned aliphatic polyamides and semi-aromatic polyamides, the fully aromatic polyamides may also be produced by binding biomass-derived terephthalic acid to phenylenediamine.

Examples of the cellulose fibers include rayon, polynosic, cupra, acetate, lyocell, modal, and other fibers produced from plant materials such as woods pulp. These cellulose fibers are preferred because they have excellent environmental performance in that, for example, they are not only made from carbon-neutral raw materials, but are also biodegradable and do not emit toxic gases when burned after use. In view of the balance of process efficiency, environmental friendliness, and mechanical strength, rayon, polynosic, and lyocell are particularly preferred among these.

The cord used may also be a recycled cord obtained by recovery and refinement from used products such as drink bottles or clothing, followed by re-spinning, regardless of whether it is a synthetic or biomass-derived cord.

The cord may be formed by intertwining one or more filaments. Examples include those formed by combining and

first twisting two 1100 dtex multifilaments (i.e., 1100/2 dtex) for 48 times per 10 cm, followed by combining and final twisting two first twisted cords for the same number of times in the opposite or same direction with respect to that of the first twisting, and those formed by combining and first twisting two 1670 dtex multifilaments (i.e., 1670/2 dtex) for 40 times per 10 cm, followed by combining and final twisting two first twisted cords.

Moreover, the cord is preferably previously coated with an adhesive layer to ensure good adhesion to the coating layer. The adhesive layer may be a known one. Examples include those formed by treatment with a resorcinol-formaldehyde-rubber latex (RFL), as well as those formed by epoxy treatment, e.g., with an adhesive composition containing a sorbitol polyglycidyl ether and a blocked isocyanate, followed by RFL treatment, and those formed by treatment with an adhesive composition containing a halohydrin compound, a blocked isocyanate compound, and a rubber latex.

Examples of the resorcinol-formaldehyde-rubber latex (RFL) include an adhesive composition containing a natural rubber and/or synthetic rubber latex and a co-condensate of phenol-formaldehyde and resorcinol as described in JP S48-11335 A. Such an adhesive composition can be prepared by, for example, a method including condensing phenol and formaldehyde in the presence of an alkaline catalyst, copolymerizing an aqueous phenol-formaldehyde resin solution with resorcinol, and mixing the resulting phenol-formaldehyde-resorcinol resin solution with a latex rubber.

Here, examples of the synthetic rubber latex include polybutadiene polymer latex, styrene-butadiene copolymer latex, polyisoprene polymer latex, butadiene-acrylonitrile copolymer latex, butadiene-vinylpyridine polymer latex, and butadiene-vinylpyridine-styrene copolymer latex.

The adhesive layer formed of the resorcinol-formaldehyde-rubber latex (RFL) may be formed by attaching a RFL adhesive, for example, by dipping the cord in a RFL liquid. The RFL adhesive is usually attached after a fiber cord is obtained by twisting, but it may be attached before or during the twisting.

The composition of the RFL adhesive is not limited and may be appropriately selected. In particular, it is preferably a composition that contains 0.1 to 10% by mass of resorcinol, 0.1 to 10% by mass of formaldehyde, and 1 to 28% by mass of latex, more preferably a composition that contains 0.5 to 3% by mass of resorcinol, 0.5 to 3% by mass of formaldehyde, and 10 to 25% by mass of latex.

For example, heating may be performed by drying the cord with the RFL adhesive composition attached thereto at 100 to 250°C for one to five minutes and then heat-treating the resulting cord at 150 to 250°C for one to five minutes. The heat treatment conditions after the drying are desirably at 180 to 240°C for one to two minutes.

The adhesive composition containing a sorbitol polyglycidyl ether and a blocked isocyanate may be any composition that contains a sorbitol polyglycidyl ether and a blocked isocyanate. In particular, the adhesive composition desirably contains an epoxy compound that is a sorbitol polyglycidyl ether and has a chlorine content of 9.6% by mass or lower, and a blocked isocyanate.

Examples of the sorbitol polyglycidyl ether include sorbitol diglycidyl ether, sorbitol triglycidyl ether, sorbitol tetraglycidyl ether, sorbitol pentaglycidyl ether, sorbitol hexaglycidyl ether, and mixtures thereof, each of which may contain sorbitol monoglycidyl ether. The sorbitol polyglycidyl ether has a large number of epoxy groups in one molecule and can form a highly crosslinked structure.

The chlorine content of the sorbitol polyglycidyl ether is preferably 9.6% by mass or lower, more preferably 9.5% by mass or lower, still more preferably 9.4% by mass or lower, particularly preferably 9.3% by mass or lower. The lower limit of the chlorine content is not limited and may be 1% by mass or higher, for example.

In the present invention, the chlorine content of the sorbitol polyglycidyl ether can be determined as described in JIS K 7243-3, for example.

The chlorine content of the sorbitol polyglycidyl ether may be reduced, for example, by reducing the amount of epichlorohydrin used in the synthesis of the epoxy compound.

The blocked isocyanate is a compound produced by reaction of an isocyanate compound and a blocking agent, which is temporarily deactivated by the group derived from the blocking agent. When heated at a predetermined temperature, the group derived from the blocking agent can dissociate to form an isocyanate group.

Examples of the isocyanate compound include those having two or more isocyanate groups in the molecule.

Examples of diisocyanates having two isocyanate groups include hexamethylene diisocyanate, diphenylmethane diisocyanate, xylylene diisocyanate, isophorone diisocyanate, phenylene diisocyanate, tolylene diisocyanate, trimethylhexamethylene diisocyanate, metaphenylene diisocyanate, naphthalene diisocyanate, diphenyl ether diisocyanate, diphenylpropane diisocyanate, and biphenyl diisocyanate, as well as isomers, alkylsubstituted products, halides, and benzene ring-hydrogenated products of these diisocyanates. Also usable are triisocyanates having three isocyanate groups, tetraisocyanates having four isocyanate groups, polymethylene polyphenyl polyisocyanates, etc. These isocyanate compounds may be used alone or in combinations of two or more. Tolylene diisocyanate, metaphenylene diisocyanate, diphenylmethane diisocyanate, hexamethylene diisocyanate, and polymethylene polyphenyl polyisocyanate are preferred among these.

Examples of the blocking agent include lactam blocking agents such as ε-caprolactam, δ-valerolactam, γ-butyrolactam, and β-propiolactam; phenolic blocking agents such as phenol, cresol, resorcinol, and xylenol; alcohol

blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzyl alcohol; oxime blocking agents such as formamidoxime, acetaldoxime, acetoxime, methyl ethyl ketoxime, diacetyl monoxime, benzophenone oxime, and cyclohexanone oxime; and active methylene blocking agents such as dimethyl malonate, diethyl malonate, ethyl acetoacetate, methyl acetoacetate, and acetylacetone. Lactam blocking agents, phenolic blocking agents, and oxime blocking agents are preferred among these.

In the adhesive composition containing a sorbitol polyglycidyl ether and a blocked isocyanate, the amount of the blocked isocyanate per 100 parts by mass of the sorbitol polyglycidyl ether is preferably 50 parts by mass or more, more preferably 200 parts by mass or more. The upper limit of the amount is preferably 500 parts by mass or less, more preferably 400 parts by mass or less.

The adhesive composition containing a sorbitol polyglycidyl ether and a blocked isocyanate may optionally contain any of the following optional components: epoxy compounds other than the sorbitol polyglycidyl ether, resins copolymerizable with the sorbitol polyglycidyl ether, curing agents other than the blocked isocyanate, organic thickeners, antioxidants, photostabilizers, adhesion improvers, reinforcing agents, softeners, colorants, leveling agents, flame retardants, antistatic agents, etc.

Examples of the epoxy compounds other than the sorbitol polyglycidyl ether include glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolac glycidyl ether, and brominated bisphenol A diglycidyl ether; glycidyl esters such as hexahydrophthalic acid glycidyl ester and dimer acid glycidyl ester; glycidyl amines such as triglycidyl isocyanurate, glycidyl hydantoin, tetraglycidyl diaminodiphenylmethane, triglycidyl para-aminophenol, triglycidyl meta-aminophenol, diglycidyl aniline, diglycidyl toluidine, tetraglycidyl meta-xylenediamine, diglycidyl tribromoaniline, and tetraglycidyl bisaminomethylcyclohexane; and alicyclic or aliphatic epoxides such as 3,4-epoxycyclohexylmethyl carboxylate, epoxidized polybutadiene, and epoxidized soybean oil.

The treatment with the adhesive composition containing a sorbitol polyglycidyl ether and a blocked isocyanate may be treatment performed to attach the components in RFL to the cord, optionally followed by heating.

For example, the attachment may be carried out by any method such as application with a roller, spraying through a nozzle, or immersion in a bath liquid (adhesive composition). In view of uniform attachment and removal of the excessive adhesive, attachment by immersion is preferred.

Moreover, to control the amount attached to the cord, other means may be further used such as squeezing with a pressure roller, scraping off with a scraper or the like, blowing off with air, suction, beating with a beater, etc.

The amount attached to the cord is preferably 1.0% by mass or more, more preferably 1.5% by mass or more, but it is preferably 3.0% by mass or less, more preferably 2.5% by mass or less.

Here, the amount attached to the cord refers to the amount of the solids in the RFL adhesive attached per 100 parts by mass of the cord.

The total solid concentration of the adhesive composition containing a sorbitol polyglycidyl ether and a blocked isocyanate is preferably 0.9% by mass or higher, more preferably 14% by mass or higher, but it is preferably 29% by mass or lower, more preferably 23% by mass or lower.

Resorcinol, formaldehyde, and a rubber latex, as well as other additives such as a vulcanization regulator, zinc oxide, an antioxidant, and a defoamer may be added to the adhesive composition containing a sorbitol polyglycidyl ether and a blocked isocyanate.

For example, heating may be performed by drying the reinforcing material with the RFL adhesive composition attached thereto at 100 to 250°C for one to five minutes and then heat-treating the resulting material at 150 to 250°C for one to five minutes. The heat treatment conditions after the drying are desirably at 180 to 240°C for one to two minutes.

The adhesive composition containing a halohydrin compound, a blocked isocyanate compound, and a rubber latex may be any composition containing these components. It is desirably an adhesive composition that contains a halohydrin compound, a blocked isocyanate compound, and a rubber latex and does not contain resorcinol and formaldehyde.

Examples of the halohydrin compound include compounds produced by reacting a polyol compound and an epihalohydrin compound (halohydrin ether).

The polyol compound refers to a compound having two or more hydroxyl groups in the molecule. Examples include glycols such as ethylene glycol, propylene glycol, polyethylene glycol, and polypropylene glycol, hydroxylic acids such as erythritol, xylitol, sorbitol, and tartaric acid, glyceric acid, glycerol, diglycerol, polyglycerol, trimethylolpropane, trimethylolethane, and pentaerythritol.

Examples of the epihalohydrin compound include epichlorohydrin and epibromohydrin.

Examples of the halohydrin compound include fluoroalcohol compounds, chlorohydrin compounds, bromohydrin compounds, and iodohydrin compounds. Halogenated sorbitols and halogenated glycerols are preferred among these.

The halogen content based on 100% by mass of the halohydrin compound is preferably 5.0 to 15.0% by mass,

more preferably 7.0 to 13.0% by mass, still more preferably 9.0 to 12.0% by mass.

Examples of the blocked isocyanate compound include compounds as described above for the blocked isocyanate. Moreover, examples of the rubber latex include those as described above for the rubber latex.

The adhesive composition containing a halohydrin compound, a blocked isocyanate compound, and a rubber latex desirably contains 10.0 to 30.0 parts by mass of the halohydrin compound, 10.0 to 30.0 parts by mass of the blocked isocyanate compound, and 80.0 to 240.0 parts by mass of the rubber latex. Moreover, the adhesive composition desirably does not contain resorcinol and formaldehyde.

The adhesive layer formed of the adhesive composition containing a halohydrin compound, a blocked isocyanate compound, and a rubber latex is formed on the surface of the cord using the adhesive composition. For example, the adhesive layer may be formed by, but not limited to, immersion, brushing, casting, spraying, roll coating, or knife coating.

FIG. 5 is an enlarged cross-sectional view showing the vicinity of the tread portion 4 in the tire 2 of FIG. 1. Tt denotes the thickness of the tread portion 4, and Tb denotes the thickness Tb of each of the interior layer 38 and the exterior layer 40 in the belt layer 16.

To better achieve the advantageous effect, desirably, the tire 2 further includes a tread portion 4, and the product of the thickness Tt (mm) of the tread portion 4 and the above-defined E1, Tt $\times$ E1, is at least 100 but not more than 120.

The product of Tt $\times$ E1 is preferably 85 or more, more preferably 90 or more, still more preferably 95 or more, further preferably 100 or more, further preferably 105 or more, but it is preferably 117 or less, more preferably 115 or less, still more preferably 112 or less.

The mechanism by which the advantageous effect can be better achieved by adjusting the product of Tt $\times$ E1 within the range indicated above, particularly 100 to 120, is not clear, but it is considered that adjusting the product of Tt $\times$ E1 to the predetermined value or more can reduce deformation of the tread crown portion, thereby facilitating the prevention of damage derived from the crown portion.

However, it is considered that if E1 is large, the tread rubber can be compressed between the belt layer and the road surface and can be easily deformed, resulting in increased heat generation, while if Tt is large, heat accumulation can occur easily in the tread portion. Thus, it is considered that adjusting the product of Tt $\times$ E1 to the predetermined value or less can reduce heat accumulation and heat generation, thereby facilitating improvement in durability.

Thus, it is believed that durability can be improved by adjusting the product of Tt $\times$ E1 within the range indicated above.

The thickness Tt of the tread portion 4 is preferably 7.6 mm or more, more preferably 8.0 mm or more, still more preferably 9.0 mm or more, further preferably 10.0 mm or more, but it is preferably 15.0 mm or less, more preferably 14.0 mm or less, still more preferably 13.0 mm or less. When Tt is within the range indicated above, the advantageous effect tends to be better achieved.

In the present invention, the "thickness of the tread portion" refers to the thickness of the tread portion measured on the tire equator in a radial cross-section of the tire. The thickness Tt of the tread portion is measured along the normal of the tread surface at the tire equator and corresponds to the distance from the tread surface to the interface closest to the tire surface of the belt layer, carcass layer, belt-reinforcing layer, or other reinforcing layer containing steel or textile or other fiber material. Moreover, when the tread portion has a groove on the tire equator, it is the linear distance from a plane defined by a straight line connecting the outermost edges of the groove with respect to the tire radial direction. In the tire 2 of FIG. 5, the thickness Tt of the tread portion is the linear distance from a plane defined by a straight line connecting the outermost edges of a groove 26 with respect to the tire radial direction, where the plane corresponds to the tread surface, to the outer surface of the band layer 18 with respect to the tire radial direction, when measured on the tire equator CL.

FIG. 5 is an enlarged cross-sectional view showing the vicinity of the tread portion 4 in the tire 2, in which Tb denotes the thickness of each belt ply constituting the belt layer 16.

Tb denotes the thickness of each belt ply, i.e., the interior layer 38 or exterior layer 40.

The thickness Tb of each belt ply is preferably 0.50 mm or more, more preferably 0.53 mm or more, still more preferably 0.56 mm or more, further preferably 0.59 mm or more, further preferably 0.60 mm or more, further preferably 0.61 mm or more, further preferably 0.66 mm or more, further preferably 0.67 mm or more, further preferably 0.70 mm or more, further preferably 0.72 mm or more, but it is preferably 1.50 mm or less, more preferably 1.20 mm or less, still more preferably 1.00 mm or less, further preferably 0.82 mm or less, further preferably 0.80 mm or less. When Tb is within the range indicated above, the advantageous effect tends to be better achieved.

In the present invention, the "thickness of each belt ply" refers to the thickness of each belt ply layer including a steel monofilament and a coating rubber thereof measured in a cross-section of the tire cut along a plane including the axis of rotation and also refers to the average of the thicknesses of each belt ply measured in the direction of the normal at each point on the surface of the each belt ply layer. In the case of the belt layer 16 consisting of two layers, an interior layer 38 and an exterior layer 40, in FIG. 2, the thickness of the interior layer 38 is the average of the thicknesses measured in the direction of the normal at each point on the surface of the interior layer, and the thickness of the exterior layer 40 is the average of the thicknesses measured in the direction of the normal at each point on the surface of the exterior layer.

In FIG. 1, the belt layer 16 is located radially inward of the tread portion 4. The belt layer 16 is stacked on the carcass 14. The belt layer 16 reinforces the carcass 14. In the tire 2 of FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times, but preferably not more than 0.9 times the cross-sectional width of the tire 2.

In the tire 2 of FIG. 1, an innerliner 20 is located inward of the carcass 14. The innerliner 20 is bonded to the inner surface of the carcass 14. The base material rubber of the innerliner 20 is typically a butyl rubber or a halogenated butyl rubber. The innerliner 20 maintains the internal pressure of the tire 2.

Each chafer 22 is located near a bead 12. In this embodiment, the chafer 22 desirably consists of a rubber and a fabric impregnated with the rubber. The chafer 22 may be integrated with the clinch 10.

In the tire 2, the tread portion 4 has grooves 26 including main grooves 42. As shown in FIG. 1, the tread portion 4 has a plurality of, specifically three, main grooves 42 engraved thereon. The main grooves 42 are positioned at intervals in the axial direction. Four ribs 44 extending in the circumferential direction are defined by the three main grooves 42 engraved on the present tread portion 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, e.g., in rainy weather. Thus, the tire 2 can sufficiently contact the road surface even when the road surface is wet.

The rubber layers (cap layer 30, base layer 28, etc. in FIG. 1) constituting the tread portion 4 (single-layered tread, two-layered tread, three or more-layered tread portion, etc.) in the tire 2 are formed of the respective tread rubber compositions. Moreover, the belt layer 16 (interior layer 38, exterior layer 40, etc.) includes a belt cord 17A and a topping rubber 17B (coating rubber) coating the belt cord 17A. The coating rubber is formed of a belt layer coating rubber composition.

The materials that may be used in the rubber compositions described below are common to both the tread portion (tread rubber composition) and the coating rubber in the belt layer (belt layer coating rubber composition), unless otherwise stated.

The tread rubber composition and the belt layer coating rubber composition each contain one or more rubber components.

The rubber components contribute to crosslinking and generally correspond to polymer components which have a weight average molecular weight (Mw) of 10,000 or more and which are not extractable with acetone. The rubber components are solid at room temperature (25°C).

The weight average molecular weight of the rubber components is preferably 50,000 or more, more preferably 150,000 or more, still more preferably 200,000 or more, but it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) relative to polystyrene standards.

Examples of rubber components that may be used in the tread rubber composition and the belt layer coating rubber composition include diene rubbers. Examples of diene rubbers include isoprene-based rubbers, polybutadiene rubbers (BR), styrene-butadiene rubbers (SBR), styreneisoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more. For the tread rubber composition, isoprene-based rubbers, BR, and SBR are preferred among these in order to better achieve the advantageous effect, with BR or SBR being more preferred. Also, for the belt layer coating rubber composition, isoprene-based rubbers, BR, and SBR are preferred in order to better achieve the advantageous effect, with isoprene-based rubbers being more preferred.

Here, these rubber components may be subjected to the below-described modification or hydrogenation process. Rubbers extended with oils, resins, liquid rubber components, etc. are also usable.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the above functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

The amount of isoprene-based rubbers, if present, based on 100% by mass of the rubber component content in the tread rubber composition is preferably 5% by mass or more, more preferably 10% by mass or more, still more preferably 15% by mass or more, but it is preferably 30% by mass or less, more preferably 25% by mass or less, still more preferably 20% by mass or less. When the amount is within the range indicated above, the advantageous effect tends to be better achieved.

The amount of isoprene-based rubbers based on 100% by mass of the rubber component content in the belt layer coating rubber composition is preferably 5% by mass or more, more preferably 50% by mass or more, still more preferably 75% by mass or more, particularly preferably 85% by mass or more, and may be 100% by mass. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or higher. The cis content is more preferably 95% by mass or higher, still more preferably 98% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

Moreover, the BR may be either unmodified or modified BR. Examples of the modified BR include those into which functional groups as listed for the modified diene rubbers have been introduced. The BR may also be hydrogenated polybutadiene polymers (hydrogenated BR).

For example, usable commercial BR products are available from UBE Corporation, JSR Corporation, Asahi Kasei Corporation, Zeon Corporation, etc.

The amount of BR based on 100% by mass of the rubber component content in the tread rubber composition is preferably 5% by mass or more, more preferably 10% by mass or more, still more preferably 15% by mass or more. The upper limit of the amount is preferably 50% by mass or less, more preferably 30% by mass or less, still more preferably 20% by mass or less. When the amount is within the range indicated above, the advantageous effect tends to be better achieved.

The amount of BR, if present, based on 100% by mass of the rubber component content in the belt layer coating rubber composition is preferably 5% by mass or more, more preferably 10% by mass or more, still more preferably 150 by mass or more. The upper limit of the amount is preferably 30% by mass or less, more preferably 25% by mass or less, still more preferably 20% by mass or less. When the amount is within the range indicated above, the advantageous effect tends to be better achieved.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 8% by mass or higher, still more preferably 10% by mass or higher. The styrene content is preferably 35% by mass or lower, more preferably 30% by mass or lower, still more preferably 25% by mass or lower. When the styrene content is within the range indicated above, durability tends to be improved.

Herein, the styrene content can be measured by $^{1}$H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by

mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl bond content (vinyl content) of the SBR is preferably 3% by mass or higher, more preferably 5% by mass or higher, still more preferably 7% by mass or higher. The vinyl bond content is preferably 42% by mass or lower, more preferably 35% by mass or lower, still more preferably 30% by mass or lower, further preferably 25% by mass or lower. When the vinyl bond content is within the range indicated above, durability tends to be improved.

Herein, the vinyl bond content (1,2-butadiene unit content) can be measured by infrared absorption spectrometry.

The vinyl bond content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl bond content of the SBR refers to the vinyl bond content of the one SBR, while when multiple types of SBR are used, it refers to the average vinyl bond content.

The average vinyl bond content of the SBR can be calculated using the equation: Σ{amount of each SBR × (100 (% by mass) - styrene content (% by mass) of the each SBR) × vinyl bond content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified or modified SBR. Examples of the modified SBR include those into which functional groups as listed for the modified diene rubbers have been introduced. The SBR may also be hydrogenated styrene-butadiene copolymers (hydrogenated SBR).

SBR products manufactured or sold by Sumitomo Chemical Co., Ltd., JSR Corporation, Asahi Kasei Corporation, Zeon Corporation, etc. may be used as the SBR.

The amount of SBR based on 100% by mass of the rubber component content in the tread rubber composition is preferably 5% by mass or more, more preferably 50% by mass or more, still more preferably 70% by mass or more, further preferably 80% by mass or more. The upper limit of the amount is preferably 95% by mass or less, more preferably 90% by mass or less, still more preferably 85% by mass or less. When the amount is within the range indicated above, the advantageous effect tends to be better achieved.

The amount of SBR, if present, based on 100% by mass of the rubber component content in the belt layer coating rubber composition is preferably 5% by mass or more, more preferably 10% by mass or more, still more preferably 15% by mass or more. The upper limit of the amount is preferably 30% by mass or less, more preferably 25% by mass or less, still more preferably 20% by mass or less. When the amount is within the range indicated above, the advantageous effect tends to be better achieved.

The tread rubber composition or belt layer coating rubber composition may contain a filler.

Any filler may be used, including materials known in the rubber field. Examples include inorganic fillers such as carbon black, silica, calcium carbonate, talc, alumina, clay, aluminum hydroxide, aluminum oxide, and mica; bio char, and hard-to-disperse fillers.

The total amount of fillers (the total amount of fillers such as silica and carbon black) per 100 parts by mass of the rubber component content in the tread rubber composition is preferably 30 parts by mass or more, more preferably 60 parts by mass or more, still more preferably 65 parts by mass or more, further preferably 70 parts by mass or more, particularly preferably 80 parts by mass or more. The upper limit of the total amount is preferably 150 parts by mass or less, more preferably 120 parts by mass or less, still more preferably 100 parts by mass or less. When the total amount is within the range indicated above, the advantageous effect tends to be better achieved.

The total amount of fillers (the total amount of fillers such as silica and carbon black) per 100 parts by mass of the rubber component content in the belt layer coating rubber composition is preferably 10 parts by mass or more, more preferably 40 parts by mass or more, still more preferably 55 parts by mass or more, particularly preferably 60 parts by mass or more. The upper limit of the total amount is preferably 120 parts by mass or less, more preferably 100 parts by mass or less, still more preferably 80 parts by mass or less. When the total amount is within the range indicated above, the advantageous effect tends to be better achieved.

Carbon-derived fillers (carbon-containing fillers), such as carbon black, and silica are preferred among the fillers.

Any carbon black may be used in the tread rubber composition or belt layer coating rubber composition, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more. In addition to the conventional carbon black made from mineral oils, etc., carbon black made

from biomass materials such as lignin is also usable. Moreover, the carbon black may be appropriately replaced with an equivalent amount of recycled carbon black produced by decomposing rubber or plastic products containing carbon black, such as tires.

The nitrogen adsorption specific surface area ($N_2SA$) of the carbon black in the tread rubber composition is preferably 50 $m^2/g$ or more, more preferably 70 $m^2/g$ or more, still more preferably 90 $m^2/g$ or more. The $N_2SA$ is also preferably 200 $m^2/g$ or less, more preferably 150 $m^2/g$ or less, still more preferably 120 $m^2/g$ or less, particularly preferably 114 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

The nitrogen adsorption specific surface area ($N_2SA$) of the carbon black in the belt layer coating rubber composition is preferably 10 $m^2/g$ or more, more preferably 20 $m^2/g$ or more, still more preferably 25 $m^2/g$ or more. The $N_2SA$ is also preferably 80 $m^2/g$ or less, more preferably 60 $m^2/g$ or less, still more preferably 45 $m^2/g$ or less, particularly preferably 35 $m^2/g$ or less. When the $N_2SA$ is within the range indicated above, the advantageous effect tends to be better achieved.

The amount of carbon black per 100 parts by mass of the rubber component content in the tread rubber composition is preferably 1 part by mass or more, more preferably 3 parts by mass or more, still more preferably 5 parts by mass or more. The upper limit of the amount is preferably 100 parts by mass or less, more preferably 50 parts by mass or less, still more preferably 45 parts by mass or less, further preferably 40 parts by mass or less, particularly preferably 30 parts by mass or less. When the amount is within the range indicated above, the advantageous effect tends to be better achieved.

The amount of carbon black per 100 parts by mass of the rubber component content in the belt layer coating rubber composition is preferably 10 parts by mass or more, more preferably 40 parts by mass or more, still more preferably 55 parts by mass or more, particularly preferably 60 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

In particular, the amount of carbon black having a nitrogen adsorption specific surface area of 45 $m^2/g$ or less per 100 parts by mass of the rubber component content in the belt layer coating rubber composition is preferably 5 parts by mass or more, more preferably 20 parts by mass or more, still more preferably 25 parts by mass or more, particularly preferably 30 parts by mass or more. The upper limit of the amount is preferably 60 parts by mass or less, more preferably 50 parts by mass or less, still more preferably 40 parts by mass or less. When the amount is within the range indicated above, the advantageous effect tends to be better achieved.

The mechanism by which the advantageous effect can be better achieved by blending a predetermined amount of carbon black having a $N_2SA$ within the range indicated above, particularly 5 to 60 parts by mass of carbon black having a $N_2SA$ of 45 $m^2/g$ or less, in the belt layer coating rubber composition is not clear, but it is believed that the use of large particle size carbon black in the belt coating layer makes it possible to easily reduce heat generation in the belt layer and easily improve the responsiveness of the belt layer, thereby improving durability.

Examples of silica usable in the tread rubber composition or belt layer coating rubber composition include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to the above-mentioned types of silica, silica made from biomass materials such as rice husks is also usable.

The nitrogen adsorption specific surface area ($N_2SA$) of the silica is preferably 50 $m^2/g$ or more, more preferably 100 $m^2/g$ or more, still more preferably 150 $m^2/g$ or more, further preferably 175 $m^2/g$ or more, particularly preferably 180 $m^2/g$ or more, most preferably 190 $m^2/g$ or more. Moreover, the upper limit of the $N_2SA$ of the silica is not limited, but it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

The amount of silica per 100 parts by mass of the rubber component content in the tread rubber composition is preferably 20 parts by mass or more, more preferably 50 parts by mass or more, still more preferably 65 parts by mass or more, particularly preferably 75 parts by mass or more. The upper limit of the amount is preferably 150 parts by mass or less, more preferably 100 parts by mass or less, still more preferably 90 parts by mass or less. When the amount is within the range indicated above, the advantageous effect tends to be better achieved.

The mechanism by which the advantageous effect can be better achieved by adjusting the amount of silica within the range indicated above, particularly 50 to 100 parts by mass, is not clear, but it is believed that the use of a predetermined amount of silica makes it possible to easily reduce the tan$\delta$ and easily improve responsiveness, thereby improving durability.

The amount of silica, if present, per 100 parts by mass of the rubber component content in the belt layer coating rubber composition is preferably 5 parts by mass or more, more preferably 10 parts by mass or more, still more preferably

15 parts by mass or more. The upper limit of the amount is preferably 30 parts by mass or less, more preferably 25 parts by mass or less, still more preferably 20 parts by mass or less. When the amount is within the range indicated above, the advantageous effect tends to be better achieved.

When the tread rubber composition or belt layer coating rubber composition contains silica, it preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the tread rubber composition or belt layer coating rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone or in combinations of two or more.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers per 100 parts by mass of the rubber component content in the tread rubber composition or belt layer coating rubber composition is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The tread rubber composition or belt layer coating rubber composition may contain a plasticizer.

The term "plasticizer" refers to a material that can impart plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber component content in the tread rubber composition is preferably 5 parts by mass or more, more preferably 10 parts by mass or more, still more preferably 15 parts by mass or more, but it is preferably 50 parts by mass or less, more preferably 30 parts by mass or less, still more preferably 25 parts by mass or less. When the amount is within the range indicated above, the advantageous effect tends to be better achieved. It should be noted that when the above-mentioned extended rubbers are used, the amount of the extender components used in the extended rubbers is included in the amount of plasticizers.

The amount of plasticizers (the total amount of plasticizers) per 100 parts by mass of the rubber component content in the belt layer coating rubber composition is preferably 30 parts by mass or less, more preferably 10 parts by mass or less, still more preferably 5 parts by mass or less, further preferably 2 parts by mass or less, particularly preferably 1 part by mass or less, and may be 0 parts by mass. When the amount is within the range indicated above, the advantageous effect tends to be better achieved. It should be noted that when the above-mentioned extended rubbers are

used, the amount of the extender components used in the extended rubbers are included in the amount of plasticizers.

Any liquid plasticizer (plasticizer which is liquid at room temperature (25°C)) may be used in the tread rubber composition or belt layer coating rubber composition, and examples include oils and liquid polymers (liquid resins, liquid diene polymers, etc.). These may be used alone or in combinations of two or more.

The amount of liquid plasticizers per 100 parts by mass of the rubber component content in the tread rubber composition is preferably 5 parts by mass or more, more preferably 10 parts by mass or more, still more preferably 15 parts by mass or more, but it is preferably 50 parts by mass or less, more preferably 30 parts by mass or less, still more preferably 25 parts by mass or less. When the amount is within the range indicated above, the advantageous effect tends to be better achieved. Here, a similar range is also suitable for the amount of oils.

The amount of liquid plasticizers per 100 parts by mass of the rubber component content in the belt layer coating rubber composition is preferably 30 parts by mass or less, more preferably 10 parts by mass or less, still more preferably 5 parts by mass or less, further preferably 2 parts by mass or less, particularly preferably 1 part by mass or less, and may be 0 parts by mass. When the amount is within the range indicated above, the advantageous effect tends to be better achieved. Here, a similar range is also suitable for the amount of oils.

Examples of oils include process oils, plant oils, and mixtures thereof. Examples of process oils include paraffinic process oils, aromatic process oils, and naphthenic process oils, such as mild extract solvates (MES), distillate aromatic extracts (DAE), treated distillate aromatic extracts (TDAE), treated residual aromatic extracts (TRAE), and residual aromatic extracts (RAE). Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo **K.K.,** ENEOS Corporation, Olisoy, H&R, Hokoku Corporation, Showa Shell Sekiyu **K.K.,** Fuji Kosan Co., Ltd., The Nisshin Oillio Group., Ltd., etc. Process oils, such as paraffinic process oils, aromatic process oils, and naphthenic process oils, and plant oils are preferred among these. From the standpoint of life cycle assessment, oils obtained by purifying lubricating oils used in rubber mixing machines, engines, or other applications, or waste cooking oils used in cooking establishments may also be used as the oils.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the tread rubber composition or belt layer coating rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

The amount of the above-mentioned resins, if present, per 100 parts by mass of the rubber component content in the tread rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The amount of the above-mentioned resins, if present, per 100 parts by mass of the rubber component content in the belt layer coating rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the above-mentioned resins is preferably 60°C or higher, more preferably 70°C or higher, still more preferably 80°C or higher. The upper limit of the softening point is preferably 160°C or lower, more preferably 130°C or lower, still more preferably 115°C or lower. When the softening point is within the range indicated above, durability tends to be improved.

Here, the softening point of the above-mentioned resins is determined as set forth in JIS K 6220-1:2001 using a ring and ball softening point measuring apparatus and defined as the temperature at which the ball drops down. The softening point of the resins indicated above is usually higher by 50°C $\pm$ 5°C than the glass transition temperature of the resins.

The aromatic vinyl polymers refer to polymers containing aromatic vinyl monomers as structural units. Examples include resins produced by polymerization of $\alpha$-methylstyrene and/or styrene. Specific examples include styrene

homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpenestyrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), and (meth)acrylamide and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The tread rubber composition or belt layer coating rubber composition preferably contains an antioxidant from the standpoint of properties such as cracking resistance and ozone resistance.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3' ,5'-di-t-butyl-4'-hydroxyphenyl)propionate] methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. For example, usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content in the tread rubber composition or belt layer coating rubber composition is preferably 0.5 parts by mass or more, more preferably 1.0 parts by mass or more, still more preferably 2.0 parts by mass or more. The amount is preferably 7.0 parts by mass or less, more preferably 4.0 parts by mass or less, still more preferably 3.0 parts by mass or less.

The tread rubber composition or belt layer coating rubber composition preferably contains stearic acid.

The amount of stearic acid per 100 parts by mass of the rubber component content in the tread rubber composition or belt layer coating rubber composition is preferably 0.5 parts by mass or more, more preferably 1.0 parts by mass or more, still more preferably 1.5 parts by mass or more, further preferably 2.0 parts by mass or more. The amount is preferably 7.0 parts by mass or less, more preferably 4.0 parts by mass or less, still more preferably 3.0 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The tread rubber composition or belt layer coating rubber composition preferably contains zinc oxide.

The amount of zinc oxide per 100 parts by mass of the rubber component content in the tread rubber composition or belt layer coating rubber composition is preferably 0.5 parts by mass or more, more preferably 1.0 parts by mass or more, still more preferably 2.0 parts by mass or more. The amount is preferably 12.0 parts by mass or less, more preferably 11.0 parts by mass or less, still more preferably 10.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The tread rubber composition or belt layer coating rubber composition may contain a wax.

The amount of waxes per 100 parts by mass of the rubber component content in the tread rubber composition or belt layer coating rubber composition is preferably 0.5 parts by mass or more, more preferably 1.0 parts by mass or more, still more preferably 2.0 parts by mass or more. The amount is preferably 10.0 parts by mass or less, more preferably 7.0 parts by mass or less, still more preferably 5.0 parts by mass or less.

Any wax may be used, and examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. For example, usable commercial products are available from Ouchi Shinko Chemical Industrial Co., Ltd., Nippon Seiro Co., Ltd., Seiko Chemical Co., Ltd., etc.

The tread rubber composition or belt layer coating rubber composition preferably contains sulfur to moderately form crosslinks between the polymer chains, thereby imparting good properties.

The amount of sulfur per 100 parts by mass of the rubber component content in the tread rubber composition or belt layer coating rubber composition is preferably 0.1 parts by mass or more, more preferably 1.0 parts by mass or more, still more preferably 1.7 parts by mass or more. The amount is preferably 6.0 parts by mass or less, more preferably 5.0 parts by mass or less, still more preferably 4.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The tread rubber composition or belt layer coating rubber composition preferably contains a vulcanization accelerator.

The amount of vulcanization accelerators in the tread rubber composition or belt layer coating rubber composition is not limited and may be freely determined according to the desired curing rate and crosslink density. The amount of vulcanization accelerators per 100 parts by mass of the rubber component content is preferably 0.5 parts by mass or more, more preferably 1.0 parts by mass or more, still more preferably 2.5 parts by mass or more. The upper limit of the amount is preferably 8.0 parts by mass or less, more preferably 6.0 parts by mass or less, still more preferably 4.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide, guanidine, and benzothiazole vulcanization accelerators are preferred among these.

In addition to the above-mentioned components, the tread rubber composition or belt layer coating rubber composition may appropriately contain compounding agents commonly used in the tire industry such as releasing agents and other materials.

The tread portion 4 desirably includes at least one rubber layer including the above-described rubber composition. Desirably, the outermost rubber layer of the tread portion 4 with respect to the tire radial direction (the cap layer 30 in the exemplary embodiment in FIG. 1) is formed of the above-described suitable rubber composition.

The belt layer coating rubber composition may also contain other components such as an organic acid cobalt salt or a thermosetting resin.

Here, the term "thermosetting resins" refers to resin components that can cause an effective reaction with heat and that, unlike resins that fall into plasticizers, are not extractable with solvents, which distinguishes them from each other.

Examples of organic acid cobalt salts include cobalt stearate, cobalt naphthenate, cobalt neodecanoate, cobalt boron 3 neodecanoate, and cobalt abietate. Usable commercial products are available from DIC Corporation, etc. These may be used alone or in combinations of two or more. Preferred among these is cobalt stearate.

The amount of organic acid cobalt salts, calculated as cobalt element, per 100 parts by mass of the rubber component content in the belt layer coating rubber composition is preferably 0.1 parts by mass or more, but it is preferably 1.2 parts by mass or less, more preferably 0.8 parts by mass or less, still more preferably 0.5 parts by mass or less. When the amount is within the range indicated above, the advantageous effect tends to be better achieved.

Suitable examples of thermosetting resins include resorcinol condensates (resorcinol resins) and phenol resins. These may be used alone or in combinations of two or more.

Examples of usable resorcinol condensates include compounds (resins) represented by the following formula:

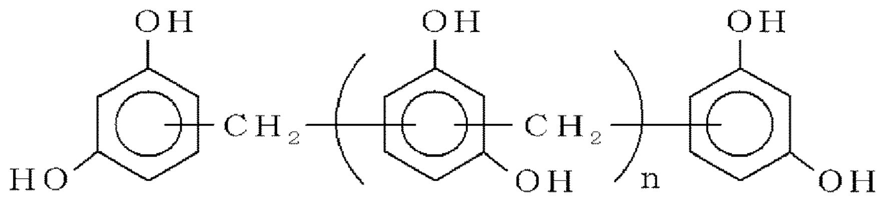

wherein n is an integer of 1 or more.

The resorcinol condensates may also be modified resorcinol condensates. Examples of usable modified resorcinol condensates include compounds (resins) represented by the following formula:

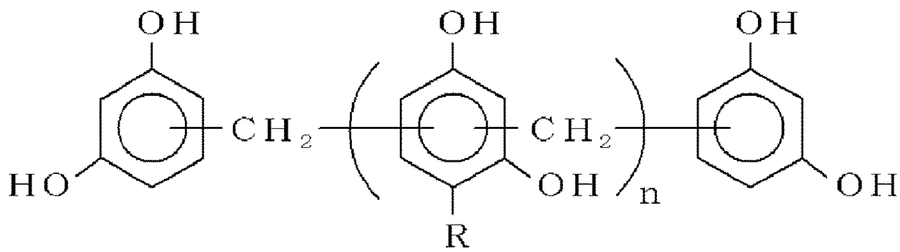

wherein n is an integer of 1 or more, and R is an alkyl group.

Usable commercial resorcinol condensates are available from Taoka Chemical Co., Ltd., INDSPEC Chemical Corporation, etc.

The phenol resins can be produced by reacting phenol with an aldehyde such as formaldehyde in the presence of an acid or alkali catalyst.

The phenol resins may also be modified phenol resins which have been modified with cashew oil, tall oil, rosin, etc. Cashew oil-modified phenol resins are preferred among the modified phenol resins. Moreover, examples of usable cashew oil-modified phenol resins include compounds (resins) represented by the following formula:

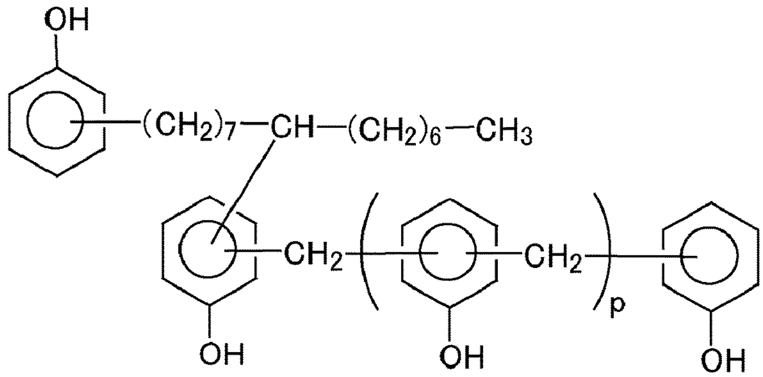

wherein p is an integer of 1 to 9, preferably 5 or 6.

Usable commercial phenol resins are available from Sumitomo Bakelite Co., Ltd., etc.

The amount of thermosetting resins per 100 parts by mass of the rubber component content in the belt layer coating rubber composition is preferably 1 part by mass or more, more preferably 3 parts by mass or more, still more preferably 5 parts by mass or more, but it is preferably 15 parts by mass or less, more preferably 10 parts by mass or less, still more preferably 8 parts by mass or less. When the amount is within the range indicated above, the advantageous effect tends to be better achieved.

The materials described above may also be used in rubber compositions for forming tire components other than the tread portion 4 and belt layer 16 while appropriately changing the amounts of the materials.

The tread rubber composition, belt layer coating rubber composition, etc. may be prepared by known methods. For example, they may be prepared by kneading the compounding components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

The present invention may be applied to a tire such as a pneumatic tire or a non-pneumatic tire, preferably a pneumatic tire. In particular, the tire may be suitably used as a summer tire or winter tire (e.g., studless winter tire, snow tire, studded tire). The tire may be used as a tire for passenger cars, large passenger cars, large SUVs, heavy duty vehicles such as trucks and buses, light trucks, or motorcycles, or as a racing tire (high performance tire), etc.

The tire can be produced by usual methods. For example, an unvulcanized tread rubber composition containing various materials may be extruded into the shape of a tread portion. Separately, a steel cord (steel monofilament) and a belt layer coating rubber composition containing various materials for coating the steel cord may be combined and extruded into the shape of a belt layer. These tire components may be assembled with other tire components on a tire building machine in a usual manner to build an unvulcanized tire. The unvulcanized tire may then be heated and pressurized in a vulcanizer to produce a tire.

Although particularly preferred embodiments of the present invention are described in detail above, the present invention is not limited to the embodiments shown in the figures and may be implemented in various modified embodiments.

EXAMPLES

Examples (working examples) which are considered preferable to implement the present invention are described below although the scope of the invention is not limited to the examples.

Prototype 195/65R15 pneumatic tires for passenger cars (test tires) having the basic structure shown in FIG. 1 are produced according to the specifications indicated in Table 1.

The common specifications of the test tires are as follows.

Belt ply: two belt plies (two-layered belt layer)
Angle of belt cord in each layer of belt layer with respect to tire circumferential direction: 20 degrees (crossed)
Belt cord in each layer of belt layer: single strand (steel monofilament)

The coating rubber of the interior layer and the coating rubber of the exterior layer included in the belt layer are each formed of a rubber composition having the formulation indicated in Table 1.
The interior layer and exterior layer each have the thickness Tb indicated in Table 1.
The test tires prepared according to the specifications varied as shown in Table 1 were simulated, and the results calculated according to the below-described evaluation are shown in Table 1.
Here, the reference comparative example is Comparative Example 2.

[Table 1]

| | | Example | | | | | | | | | | | | | | | Comparative Example | | | | |
|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 | 4 | 5 |
| Specification | E1 (ends/10 mm) | 8.5 | 11.2 | 11.2 | 11.2 | 11.2 | 11.2 | 11.2 | 11.2 | 11.2 | 7.0 | 11.2 | 11.2 | 12.0 | 12.0 | 12.0 | 8.7 | 11.2 | 11.2 | 11.2 | 11.2 |
| | E2 (ends/10 mm) | 6.8 | 9.0 | 9.0 | 9.0 | 9.0 | 9.0 | 9.0 | 9.0 | 9.0 | 5.6 | 9.0 | 9.0 | 9.0 | 10.2 | 9.6 | 8.7 | 9.0 | 9.0 | 9.0 | 9.0 |
| | E2/E1 | 0.80 | 0.80 | 0.80 | 0.80 | 0.80 | 0.80 | 0.80 | 0.80 | 0.80 | 0.80 | 0.80 | 0.80 | 0.75 | 0.85 | 0.80 | 1.00 | 0.80 | 0.80 | 0.80 | 0.80 |
| | S (mm) | 1.00 | 1.00 | 1.00 | 1.00 | 1.00 | 1.00 | 1.00 | 0.80 | 1.50 | 1.00 | 1.00 | 1.20 | 1.00 | 1.00 | 0.85 | 0.50 | 0.50 | 0.50 | 0.50 | 0.50 |
| | Diameter D (mm) of steel monofilament | 0.44 | 0.35 | 0.30 | 0.30 | 0.44 | 0.30 | 0.30 | 0.25 | 0.30 | 0.30 | 0.20 | 0.30 | 0.35 | 0.35 | 0.35 | 0.30 | 0.30 | 0.15 | 0.30 | 0.30 |
| | Sc (mm) | 0.15 | 0.18 | 0.36 | 0.36 | 0.36 | 0.52 | 0.36 | 0.36 | 0.30 | 0.42 | 0.36 | 0.52 | 0.37 | 0.37 | 0.32 | 0.36 | 0.36 | 0.36 | 0.50 | 0.36 |
| | Thickness Tt (mm) of tread | 10 | 7.6 | 7.6 | 10 | 10 | 10 | 8 | 10 | 10 | 15 | 10 | 10 | 10 | 10 | 10 | 12.9 | 10 | 10 | 10 | 12 |
| | Thickness Tb (mm) of each layer (interior layer, exterior layer) of belt layer | 0.59 | 0.53 | 0.66 | 0.66 | 0.80 | 0.82 | 0.66 | 0.61 | 0.60 | 0.72 | 0.56 | 0.82 | 0.72 | 0.72 | 0.67 | 0.66 | 0.66 | 0.51 | 0.80 | 0.66 |
| | Tt × E1 | 85 | 85 | 85 | 112 | 112 | 112 | 90 | 112 | 112 | 105 | 112 | 112 | 120 | 120 | 120 | 112 | 112 | 112 | 112 | 134 |
| | S × D | 0.44 | 0.35 | 0.30 | 0.30 | 0.44 | 0.30 | 0.30 | 0.20 | 0.45 | 0.30 | 0.20 | 0.36 | 0.35 | 0.35 | 0.30 | 0.15 | 0.15 | 0.08 | 0.15 | 0.15 |
| | S/Sc | 6.7 | 5.6 | 2.8 | 2.8 | 2.8 | 1.9 | 2.8 | 2.2 | 5.0 | 2.4 | 2.8 | 2.3 | 2.7 | 2.7 | 2.7 | 1.4 | 1.4 | 1.4 | 1.0 | 1.4 |
| | (E2/E1) × D | 0.35 | 0.28 | 0.24 | 0.24 | 0.35 | 0.24 | 0.24 | 0.20 | 0.24 | 0.24 | 0.16 | 0.24 | 0.26 | 0.30 | 0.28 | 0.30 | 0.24 | 0.12 | 0.24 | 0.24 |
| | (E2/E1) × Sc | 0.12 | 0.14 | 0.29 | 0.29 | 0.29 | 0.42 | 0.29 | 0.29 | 0.24 | 0.34 | 0.29 | 0.42 | 0.28 | 0.31 | 0.26 | 0.36 | 0.29 | 0.29 | 0.40 | 0.29 |
| Tread blend (parts by mass) | SBR | 85 | 85 | 85 | 85 | 85 | 85 | 85 | 85 | 85 | 85 | 85 | 85 | 85 | 85 | 85 | 85 | 85 | 85 | 85 | 85 |
| | BR | 15 | 15 | 15 | 15 | 15 | 15 | 15 | 15 | 15 | 15 | 15 | 15 | 15 | 15 | 15 | 15 | 15 | 15 | 15 | 15 |
| | Silica | 20 | 20 | 20 | 20 | 20 | 20 | 20 | 20 | 20 | 20 | 20 | 20 | 20 | 20 | 20 | 20 | 20 | 20 | 20 | 20 |
| | Carbon black N220 | 50 | 45 | 50 | 45 | 45 | 45 | 45 | 45 | 45 | 45 | 45 | 45 | 45 | 45 | 45 | 50 | 45 | 45 | 50 | 45 |
| | Oil | 15 | 15 | 15 | 15 | 15 | 15 | 15 | 15 | 15 | 15 | 15 | 15 | 15 | 15 | 15 | 15 | 15 | 15 | 15 | 15 |
| | Silane coupling agent | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 6C | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant RD | 1 | 1 | 1 | 1 | 1 | 1 | 1 | 1 | 1 | 1 | 1 | 1 | 1 | 1 | 1 | 1 | 1 | 1 | 1 | 1 |
| | Wax | 2 | 2 | 2 | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 | 2 | 2 | 2 | 2 | 2 |
| | Sulfur | 1 | 1 | 1 | 1 | 1 | 1 | 1 | 1 | 1 | 1 | 1 | 1 | 1 | 1 | 1 | 1 | 1 | 1 | 1 | 1 |
| | Vulcanization accelerator CZ | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator DZ | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Belt layer coating rubber blend (parts by mass) | NR | 100 | 100 | 100 | 100 | 100 | 100 | 100 | 100 | 100 | 100 | 100 | 100 | 100 | 100 | 100 | 100 | 100 | 100 | 100 | 100 |
| | Carbon black N326 (BET 80) | 60 | 60 | 60 | 60 | 60 | 60 | 60 | 60 | 60 | 60 | 60 | 60 | 60 | 60 | 60 | 60 | 60 | 60 | 60 | 60 |
| | Oil | 2 | 2 | 2 | 2 | 2 | 2 | 2 | 2 | 2 | 2 | 2 | 2 | 2 | 2 | 2 | 2 | 2 | 2 | 2 | 2 |
| | Thermosetting resin | 5 | 5 | 5 | 5 | 5 | 5 | 5 | 5 | 5 | 5 | 5 | 5 | 5 | 5 | 5 | 5 | 5 | 5 | 5 | 5 |
| | Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Cobalt stearate | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Antioxidant RD | 1 | 1 | 1 | 1 | 1 | 1 | 1 | 1 | 1 | 1 | 1 | 1 | 1 | 1 | 1 | 1 | 1 | 1 | 1 | 1 |
| | Zinc oxide | 10 | 10 | 10 | 10 | 10 | 10 | 10 | 10 | 10 | 10 | 10 | 10 | 10 | 10 | 10 | 10 | 10 | 10 | 10 | 10 |
| | Sulfur | 6 | 6 | 6 | 6 | 6 | 6 | 6 | 6 | 6 | 6 | 6 | 6 | 6 | 6 | 6 | 6 | 6 | 6 | 6 | 6 |
| | Vulcanization accelerator DZ | 1 | 1 | 1 | 1 | 1 | 1 | 1 | 1 | 1 | 1 | 1 | 1 | 1 | 1 | 1 | 1 | 1 | 1 | 1 | 1 |
| Evaluation | Durability (index) | 111 | 117 | 128 | 139 | 134 | 117 | 134 | 131 | 130 | 128 | 120 | 124 | 140 | 142 | 139 | 89 | 100 | 94 | 94 | 94 |

<Durability>

Each of the test tires is run on a drum at a speed of 230 km/h using a drum tester under conditions including a standard rim (6.0J), an internal pressure of 260 kPa, a load of 4.56 kN, and a road surface temperature of 80°C to determine the running time until delamination damage occurs in the tread rubber. The results are expressed as an index relative to that of the reference comparative example taken as 100. A higher index indicates better durability.

The materials of each tread blend (tread rubber composition) in Table 1 are as follows.

SBR: HPR840 (Tg: -65°C, styrene content: 10% by mass, vinyl content: 42% by mass) available from JSR Corporation
BR: BR150B (cis content: 98% by mass) available from UBE Corporation
Silica: ULTRASIL VN3 ($N_2SA$: 175 $m^2/g$) available from Evonik
Carbon black N220: DIABLACK N220 ($N_2SA$: 114 $m^2/g$) available from Mitsubishi Chemical Corporation
Oil: Diana Process oil AH-24 (aromatic process oil) available from Idemitsu Kosan Co., Ltd.
Silane coupling agent: Si69 (bis(3-triethoxysilylpropyl)tetrasulfide) available from Evonik
Antioxidant 6C: NOCRAC 6C (N-(1,3-dimethylbutyl)-N'-phenyl-p-phenylenediamine) available from Ouchi Shinko Chemical Industrial Co., Ltd.
Antioxidant RD: NOCRAC 224 (polymerized 2,2,4-trimethyl-1,2-dihydroquinoline) available from Ouchi Shinko Chemical Industrial Co., Ltd.
Wax: Ozoace 0355 available from Nippon Seiro Co., Ltd.
Stearic acid: stearic acid available from NOF Corporation
Zinc oxide: zinc oxide #3 available from Hakusui Tech Co., Ltd.
Sulfur: powdered sulfur available from Tsurumi Chemical Industry Co., Ltd.
Vulcanization accelerator CZ: NOCCELER CZ-G (N-cyclohexyl-2-benzothiazolylsulfenamide) available from Ouchi Shinko Chemical Industrial Co., Ltd.
Vulcanization accelerator DZ: NOCCELER DZ (N,N-dicyclohexyl-2-benzothiazolylsulfenamide, DCBS) available from Ouchi Shinko Chemical Industrial Co., Ltd.

The materials of each belt layer coating rubber blend (belt layer coating rubber composition) in Table 1 are as follows.

NR: TSR20
Carbon black N326: DIABLACK N326 ($N_2SA$: 80 $m^2/g$) available from Mitsubishi Chemical Corporation
Oil: Diana Process oil AH-24 (aromatic process oil) available from Idemitsu Kosan Co., Ltd.
Thermosetting resin: Sumikanol 620 (modified resorcinol condensate, softening point: 100°C) available from Taoka Chemical Co., Ltd.
Stearic acid: stearic acid available from NOF Corporation
Cobalt stearate: cost-F (cobalt content: 9.5% by mass) available from DIC Corporation
Antioxidant RD: NOCRAC 224 (polymerized 2,2,4-trimethyl-1,2-dihydroquinoline) available from Ouchi Shinko Chemical Industrial Co., Ltd.
Zinc oxide: zinc oxide #3 available from Hakusui Tech Co., Ltd.
Sulfur: powdered sulfur available from Tsurumi Chemical Industry Co., Ltd.
Vulcanization accelerator DZ: NOCCELER DZ (N,N-dicyclohexyl-2-benzothiazolylsulfenamide, DCBS) available from Ouchi Shinko Chemical Industrial Co., Ltd.

REFERENCE SIGNS LIST

2 tire
4 tread portion
6 sidewall
8 wing
10 clinch
12 bead
14 carcass
16 belt layer
17 belt ply

17A belt cord
17A1 belt cord in first belt ply
17A2 outermost belt cord with respect to tire width direction in second belt ply
17A5 belt cord provided on tire equator CL in first belt ply
17A6 belt cord provided on tire equator CL in second belt ply
17B topping rubber (coating rubber)
18 band layer
18A organic fiber cord
18B reinforcing rubber coating organic fiber cord
20 innerliner
22 chafer
26 groove
28 base layer
30 cap layer
32 bead core
34 bead apex
36 carcass ply
36a main portion
36b folded portion
38 interior layer (first belt ply)
40 exterior layer (second belt ply)
42 main groove
44 rib
CL tire equator
Tt thickness of tread portion
Tb thickness of each layer of belt layer

## Claims

**1.** A tire, comprising a two or more layered belt layer (16),

the belt layer comprising belt plies (38, 40) each comprising a steel monofilament (17A) and a coating rubber (17B), **characterised by** the belt layer having a ratio of E2/E1 of less than 0.90, wherein, when viewed in a radial cross-section of the tire, E1 denotes the number (ends/10 mm) of steel monofilaments aligned per 10 mm in a tire width direction in a region of the belt ply having the largest width in a tire axial direction which extends from a tire equator to a point Q that is located at 80% of a distance L in the tire axial direction from the tire equator to a point P that is located at an outer edge, with respect to the tire width direction, of the belt ply having the largest width in the tire axial direction; and E2 denotes the number (ends/10 mm) of steel monofilaments aligned per 10 mm in the tire width direction in a region of the belt ply having the largest width in the tire axial direction which extends from the point Q to the point P,

the belt layer having a distance S of 0.80 mm or more, wherein the distance S represents a distance in a tire radial direction between the outermost steel monofilament, with respect to the tire width direction, of the belt ply adjacent to the belt ply having the largest width in the tire axial direction and the steel monofilament of the belt ply having the largest width in the tire axial direction.

**2.** The tire according to claim 1,
wherein the steel monofilament has a diameter D of 0.25 to 0.42 mm.

**3.** The tire according to claim 1 or 2,
wherein a distance Sc between the steel monofilaments on the tire equator respectively contained in the belt plies adjacent to each other is 0.25 to 0.45 mm.

**4.** The tire according to any one of claims 1 to 3, further comprising a tread portion (4),
wherein a product of a thickness Tt (mm) of the tread portion and E1, $Tt \times E1$, is at least 100 but not more than 120.

**5.** The tire according to any one of claims 2 to 4,
wherein a product of S (mm) and D (mm), $S \times D$, is at least 0.22 but not more than 0.58.

**6.** The tire according to any one of claims 3 to 5,
wherein a ratio of S (mm) to Sc (mm), S/Sc, is at least 2.2 but not more than 4.0.

**7.** The tire according to any one of claims 1 to 6,
wherein E1 (ends/10 mm) in the belt layer is at least 8.5 but not more than 15.5.

**8.** The tire according to any one of claims 2 to 7,
wherein a product of the ratio (E2/E1) of E2 (ends/10 mm) to E1 (ends/10 mm) and D (mm), E2/E1 × D, is at least 0.18 but not more than 0.36.

**9.** The tire according to any one of claims 3 to 8,
wherein a product of the ratio (E2/E1) of E2 (ends/10 mm) to E1 (ends/10 mm) and Sc (mm), E2/E1 × Sc, is at least 0.16 but not more than 0.40.

**10.** The tire according to any one of claims 1 to 9,
wherein E2 is 6.8 to 10.2 ends/10 mm.

**11.** The tire according to any one of claims 1 to 10, further comprising a tread portion (4),
wherein a thickness Tt of the tread portion is 8.0 to 10.0 mm.

**12.** The tire according to any one of claims 1 to 11,
wherein a thickness Tb of the belt ply is 0.56 to 0.80 mm.

**13.** The tire according to any one of claims 1 to 12, further comprising a tread portion (4),

wherein the tread portion comprises a tread rubber composition, and
an amount of styrene-butadiene rubbers based on 100% by mass of a rubber component content in the tread rubber composition is 50 to 95% by mass.

**14.** The tire according to any one of claims 1 to 13,

wherein the coating rubber comprises a belt layer coating rubber composition, and
the belt layer coating rubber composition comprises an organic acid cobalt salt.

**15.** The tire according to any one of claims 1 to 14,

wherein the coating rubber comprises a belt layer coating rubber composition, and
the belt layer coating rubber composition comprises a thermosetting resin.

## Patentansprüche

**1.** Reifen, umfassend eine zwei- oder mehrlagige Gürtellage (16),

wobei die Gürtellage Gürtellagen (38, 40) umfasst, die jeweils ein Stahlmonofilament (17A) und einen Beschichtungsgummi (17B) umfassen, **dadurch gekennzeichnet, dass**
die Gürtellage ein Verhältnis von E2/E1 von weniger als 0,90 aufweist, wobei, wenn in einem radialen Querschnitt des Reifens betrachtet, E1 die Anzahl (Enden/10 mm) von Stahlmonofilamenten bezeichnet, die pro 10 mm in einer Reifenbreitenrichtung in einem Bereich der Gürtellage ausgerichtet sind, der die größte Breite in einer Reifenaxialrichtung aufweist, der sich von einem Reifenäquator zu einem Punkt Q erstreckt, der sich bei 80 % eines Abstands L in der Reifenaxialrichtung von dem Reifenäquator zu einem Punkt P befindet, der sich an einer Außenkante, in Bezug auf die Reifenbreitenrichtung, der Gürtellage mit der größten Breite in der Reifenaxialrichtung befindet, und E2 die Anzahl (Enden/10 mm) von Stahlmonofilamenten bezeichnet, die pro 10 mm in der Reifenbreitenrichtung in einem Bereich der Gürtellage ausgerichtet sind, der die größte Breite in der Reifenaxialrichtung aufweist, der sich von dem Punkt Q zu dem Punkt P erstreckt,
wobei die Gürtellage einen Abstand S von 0,80 mm oder mehr aufweist, wobei der Abstand S einen Abstand in einer Reifenradialrichtung zwischen dem äußersten Stahlmonofilament, in Bezug auf die Reifenbreitenrichtung, der Gürtellage benachbart zu der Gürtellage mit der größten Breite in der Reifenaxialrichtung und dem Stahlmonofilament der Gürtellage mit der größten Breite in der Reifenaxialrichtung darstellt.

**2.** Reifen nach Anspruch 1,
wobei das Stahlmonofilament einen Durchmesser D von 0,25 bis 0,42 mm aufweist.

**3.** Reifen nach Anspruch 1 oder 2,
wobei ein Abstand Sc zwischen den Stahlmonofilamenten auf dem Reifenäquator, die jeweils in den Gürtelschichten benachbart zueinander enthalten sind, 0,25 bis 0,45 mm beträgt.

**4.** Reifen nach einem der Ansprüche 1 bis 3, ferner umfassend einen Laufflächenabschnitt (4),
wobei ein Produkt aus einer Dicke Tt (mm) des Laufflächenabschnitts und E1, Tt x E1, mindestens 100, aber nicht mehr als 120 beträgt.

**5.** Reifen nach einem der Ansprüche 2 bis 4,
wobei ein Produkt aus S (mm) und D (mm), S x D, mindestens 0,22, aber nicht mehr als 0,58 beträgt.

**6.** Reifen nach einem der Ansprüche 3 bis 5,
wobei ein Verhältnis von S (mm) zu Sc (mm), S/Sc, mindestens 2,2, aber nicht mehr als 4,0 beträgt.

**7.** Reifen nach einem der Ansprüche 1 bis 6,
wobei E1 (Enden/10 mm) in der Gürtellage mindestens 8,5, aber nicht mehr als 15,5 beträgt.

**8.** Reifen nach einem der Ansprüche 2 bis 7,
wobei ein Produkt aus dem Verhältnis (E2/E1) von E2 (Enden/10 mm) zu E1 (Enden/10 mm) und D (mm), E2/E1 x D, mindestens 0,18, aber nicht mehr als 0,36 beträgt.

**9.** Reifen nach einem der Ansprüche 3 bis 8,
wobei ein Produkt aus dem Verhältnis (E2/E1) von E2 (Enden/10 mm) zu E1 (Enden/10 mm) und Sc (mm), E2/E1 x Sc, mindestens 0,16, aber nicht mehr als 0,40 beträgt.

**10.** Reifen nach einem der Ansprüche 1 bis 9,
wobei E2 6,8 bis 10,2 Enden/10 mm beträgt.

**11.** Reifen nach einem der Ansprüche 1 bis 10, ferner umfassend einen Laufflächenabschnitt (4),
wobei eine Dicke Tt des Laufflächenabschnitts 8,0 bis 10,0 mm beträgt.

**12.** Reifen nach einem der Ansprüche 1 bis 11,
wobei eine Dicke Tb der Gürtellage 0,56 bis 0,80 mm beträgt.

**13.** Reifen nach einem der Ansprüche 1 bis 12, ferner umfassend einen Laufflächenabschnitt (4),

wobei der Laufflächenabschnitt eine Laufflächenkautschukzusammensetzung umfasst, und
eine Menge von Styrol-Butadien-Kautschuken, bezogen auf 100 Massen-% eines Kautschukkomponentengehalts in der Laufflächenkautschukzusammensetzung, 50 bis 95 Massen-% beträgt.

**14.** Reifen nach einem der Ansprüche 1 bis 13,

wobei der Beschichtungskautschuk eine Gürtellagen-Beschichtungskautschukzusammensetzung umfasst, und
die Gürtellagen-Beschichtungskautschukzusammensetzung ein Kobaltsalz einer organischen Säure umfasst.

**15.** Reifen nach einem der Ansprüche 1 bis 14,

wobei der Beschichtungskautschuk eine Gürtellagen-Beschichtungskautschukzusammensetzung umfasst, und
die Gürtellagen-Beschichtungskautschukzusammensetzung ein wärmehärtendes Harz umfasst.

## Revendications

1. Pneumatique, comprenant deux ou plus de deux couches de ceinture en couches (16),

   la couche de ceinture comprenant des plis de ceinture (38, 40) chacun comprenant un monofilament d'acier (17A) et un caoutchouc de revêtement (17B),
   **caractérisé par**
   la couche de ceinture ayant un rapport de E2/E1 de moins de 0,90, lorsqu'il est vu dans une section transversale radiale du pneumatique, où E1 désigne le nombre (extrémités/10 mm) de monofilaments d'acier alignés par 10 mm dans une direction de largeur de pneumatique dans une zone du pli de ceinture ayant la largeur la plus grande dans une direction axiale de pneumatique qui s'étend d'un équateur de pneumatique à un point Q qui est situé à 80 % d'une distance L dans la direction axiale de pneumatique à partir de l'équateur de pneumatique à un point P qui est situé à un bord externe, par rapport à la direction de largeur de pneumatique, du pli de ceinture ayant la largeur la plus grande dans la direction axiale de pneumatique ; et E2 désigne le nombre (extrémités/10 mm) de monofilaments d'acier alignés par 10 mm dans la direction de largeur de pneumatique dans une zone du pli de ceinture ayant la largeur la plus grande dans la direction axiale de pneumatique qui s'étend du point Q au point **P,**
   la couche de ceinture ayant une distance S de 0,80 mm ou plus, où la distance S représente une distance dans une direction radiale de pneumatique entre le monofilament d'acier le plus externe, par rapport à la direction de largeur de pneumatique, du pli de ceinture adjacent au pli de ceinture ayant la largeur la plus grande dans la direction axiale de pneumatique et le monofilament d'acier du pli de ceinture ayant la largeur la plus grande dans la direction axiale de pneumatique.

2. Pneumatique selon la revendication 1,
   dans lequel le monofilament d'acier a un diamètre D de 0,25 à 0,42 mm.

3. Pneumatique selon la revendication 1 ou 2,
   dans lequel une distance Sc entre les monofilaments d'acier sur l'équateur de pneumatique respectivement contenus dans les plis de ceinture adjacents les uns aux autres est de 0,25 à 0,45 mm.

4. Pneumatique selon l'une quelconque des revendications 1 à 3, comprenant en outre une portion de bande de roulement (4),
   dans lequel un produit d'une épaisseur Tt (mm) de la portion de bande de roulement et de E1, $Tt \times E1$, est d'au moins 100 mais de pas plus de 120.

5. Pneumatique selon l'une quelconque des revendications 2 à 4,
   dans lequel un produit de S (mm) et de D (mm), $S \times D$, est d'au moins 0,22 mais de pas plus de 0,58.

6. Pneumatique selon l'une quelconque des revendications 3 à 5,
   dans lequel un rapport de S (mm) à Sc (mm), est d'au mois 2,2 mais de pas plus de 4,0.

7. Pneumatique selon l'une quelconque des revendications 1 à 6,
   dans lequel E1 (extrémités/10 mm) dans la couche de ceinture est d'au moins 8,5 mais de pas plus de 15,5.

8. Pneumatique selon l'une quelconque des revendications 2 à 7,
   dans lequel un produit du rapport (E2/E1) de E2 (extrémités/10 mm) à E1 (extrémités/10 mm) et de D (mm), $E2/E1 \times D$, est d'au moins 0,18 mais de pas plus de 0,36.

9. Pneumatique selon l'une quelconque des revendications 3 à 8,
   dans lequel un produit du rapport (E2/E1) de E2 (extrémités/mm) à E1 (extrémités/mm) et de Sc (mm), $E2/E1 \times Sc$, est d'au moins 0,16 mais de pas plus de 0,40.

10. Pneumatique selon l'une quelconque des revendications 1 à 9,
    dans lequel E2 est de 6,8 à 10,2 extrémités/10 mm.

11. Pneumatique selon l'une quelconque des revendications 1 à 10, comprenant en outre une portion de bande de roulement (4),
    dans lequel une épaisseur Tt de la portion de bande de roulement est de 8,0 à 10,0 mm.

**12.** Pneumatique selon l'une quelconque des revendications 1 à 11,
dans lequel une épaisseur Tb du pli de ceinture est de 0,56 à 0,80 mm.

**13.** Pneumatique selon l'une quelconque des revendications 1 à 12, comprenant en outre une portion de bande de roulement (4),

dans lequel la portion de bande de roulement comprend une composition de caoutchouc de bande de roulement et
une quantité de caoutchoucs de styrène-butadiène sur la base de 100 % en masse d'une teneur en composant de caoutchouc dans la composition de caoutchouc de bande de roulement est de 50 à 95 % en masse.

**14.** Pneumatique selon l'une quelconque des revendications 1 à 13,

dans lequel le caoutchouc de revêtement comprend une composition de caoutchouc de revêtement de couche de ceinture et
la composition de caoutchouc de revêtement de couche de ceinture comprend un sel de cobalt acide organique.

**15.** Pneumatique selon l'une quelconque des revendications 1 à 14,

dans lequel le caoutchouc de revêtement comprend une composition de caoutchouc de revêtement de couche de ceinture et
la composition de caoutchouc de revêtement de couche de ceinture comprend une résine thermodurcissable.

FIG.1

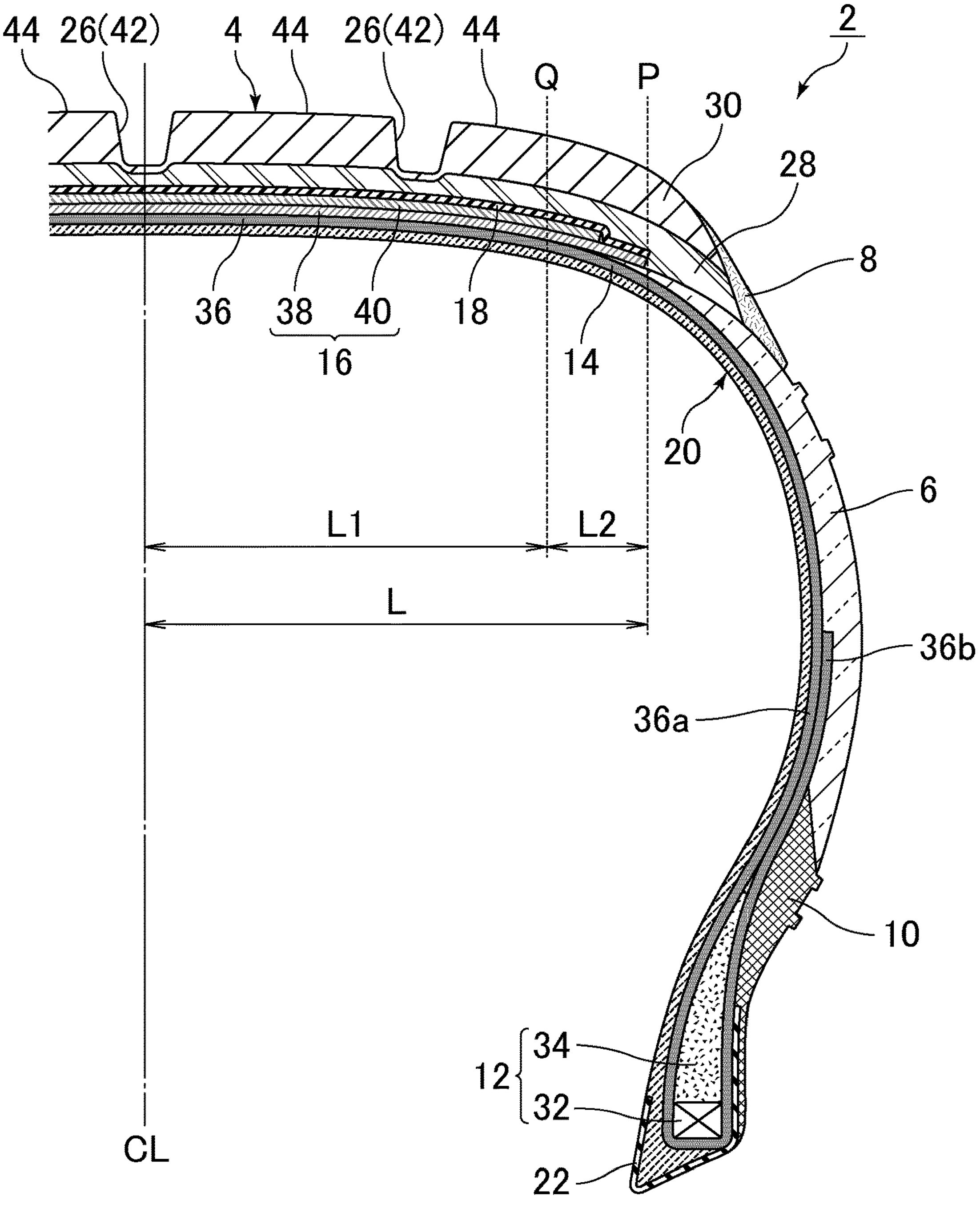
44
26(42)
4
44
26(42)
44
2
Q
P
30
28
8
36
38
40
18
16
14
20
6
L1
L2
L
36b
36a
10
12
34
32
22
CL

FIG.2

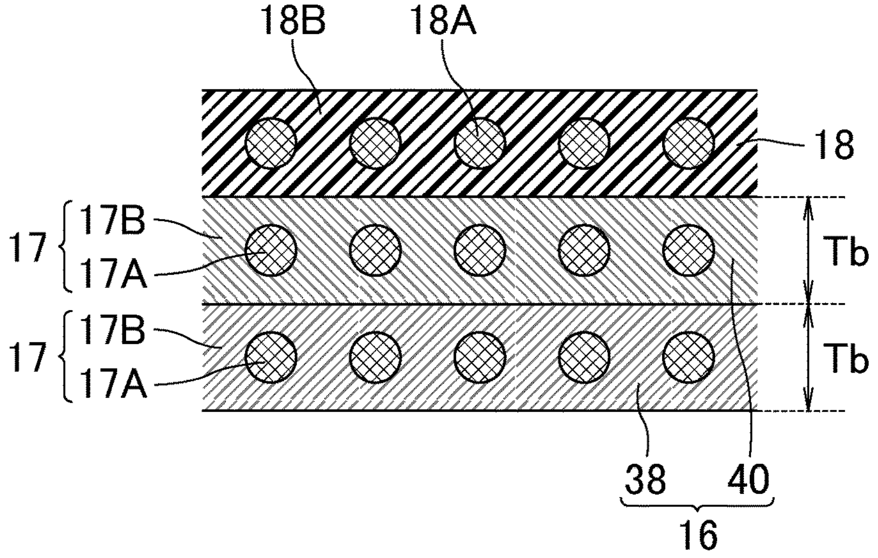
18B
18A
18
17
17B
17A
17
17B
17A
Tb
Tb
38
40
16

FIG.3

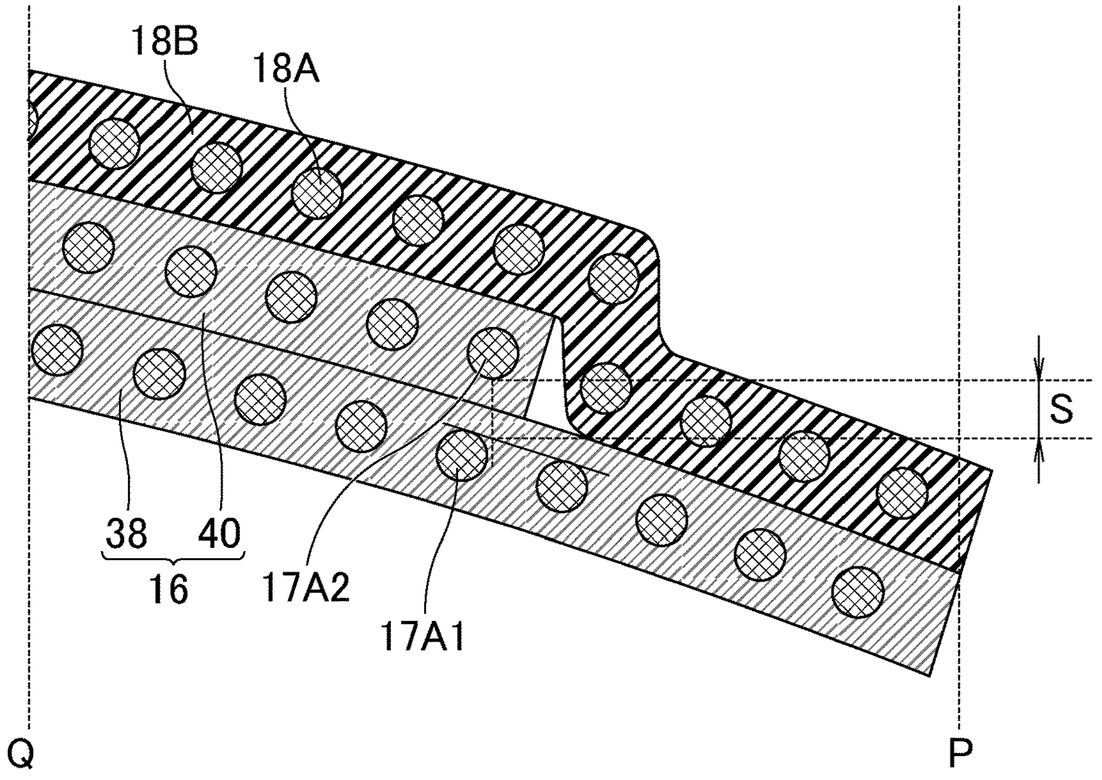
18B
18A
S
38
40
16
17A2
17A1
Q
P

FIG.4

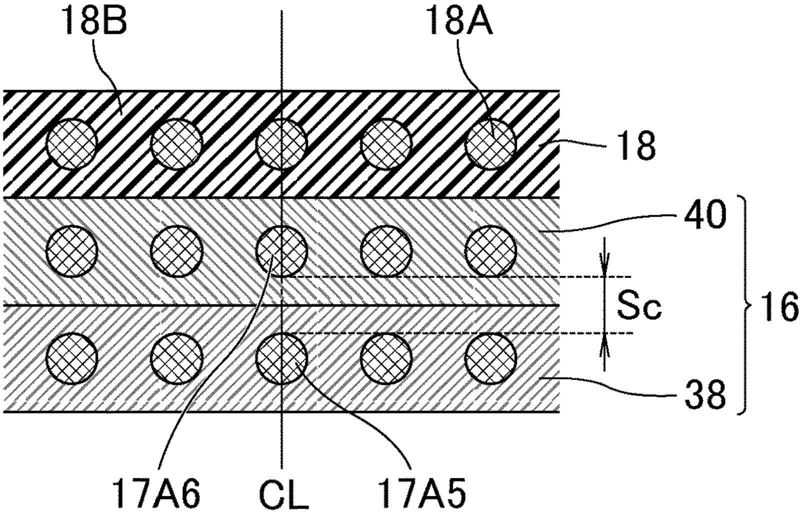
18B
18A
18
40
Sc
16
38
17A6
CL
17A5

FIG.5

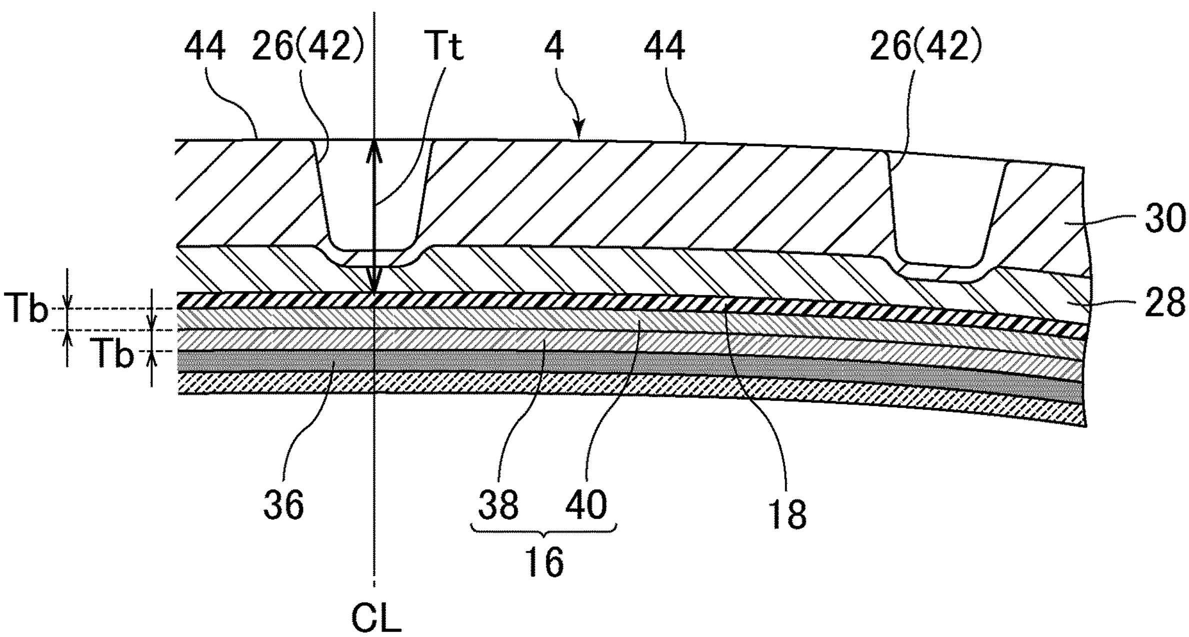
44
26(42)
Tt
4
44
26(42)
30
28
Tb
Tb
36
38
40
16
18
CL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016159155 A
- US 2020406683 A
- JP S4811335 A
- US 4414370 A
- JP S596207 A
- JP H558005 B
- JP H1313522 A
- US 5010166 A


### Non-patent literature cited in the description


- TREND. Toagosei Co., Ltd, 2000, vol. 3, 42-45